(19) Europäisches Patentamt
European Patent Office
Office européen des brevets

(11) **EP 4 357 978 A1**

(12) **EUROPEAN PATENT APPLICATION**

(43) Date of publication:
**24.04.2024 Bulletin 2024/17**

(21) Application number: **23191148.8**

(22) Date of filing: **11.08.2023**

(51) International Patent Classification (IPC):
**G06N 3/0464** (2023.01)  **G06N 3/048** (2023.01)
**G06N 3/0495** (2023.01)  **G06N 3/063** (2023.01)

(52) Cooperative Patent Classification (CPC):
**G06N 3/0464; G06N 3/048; G06N 3/0495;
G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022   US 202218047415**

(71) Applicant: **INTEL Corporation
Santa Clara, CA 95054 (US)**

(72) Inventors:
• **MATHAIKUTTY, Deepak Abraham
  Chandler, 85224 (US)**

• **RAHA, Arnab
  San Jose, 95136 (US)**
• **SUNG, Raymond Jit-Hung
  San Francisco, 94158 (US)**
• **POWER, Martin
  Dublin, D20V024 (IE)**
• **CHEEMA, Umer Iftikhar
  Hillsboro, 97124 (US)**
• **BERNARD, David Thomas
  Nicholastown Kilcullen, R56E160 (IE)**

(74) Representative: **Maiwald GmbH
Elisenhof
Elisenstraße 3
80335 München (DE)**

(54) **DEEP NEURAL NETWORK (DNN) ACCELERATOR FACILITATING QUANTIZED INFERENCE**

(57)      An DNN accelerator may include a PE array performing MAC operations. The PE array may include PEs capable of MAC operations on quantized values. A PE may include subtractors for subtracting zeropoints from quantized activations and quantized weights to generate intermediate activations and intermediate weights. The intermediate activations and intermediate weights may be stored in data storage units in the PE and maybe used by an MAC unit in the PE. The subtractors may be placed outside the MAC unit but inside the PE. The MAC unit may perform sequential cycles of MAC operations. The MAC unit may include a plurality of multipliers. The intermediate activations and intermediate weights stored in the data storage units may be reused by different multipliers in different cycles of MAC operations. An output of the MAC unit or of the PE may be multiplied with a quantization scale to produce a floating-point value.

**FIG. 1**

**Description**

Technical Field

This disclosure relates generally to neural networks, and more specifically, DNN accelerators facilitating quantized inference.

Background

DNNs are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as each inference can require hundreds of millions of MAC (multiply-accumulate) operations as well as a large amount of data to read and write. Therefore, techniques to improve efficiency of DNNs are needed.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example DNN, in accordance with various embodiments.
FIG. 2 illustrates an example convolution, in accordance with various embodiments.
FIG. 3 is a block diagram of a compute block, in accordance with various embodiments.
FIG. 4 illustrates a PE (processing element) array, in accordance with various embodiments.
FIG. 5 is a block diagram of a PE, in accordance with various embodiments.
FIG. 6 illustrates an example PE capable of MAC operations on quantized data, in accordance with various embodiments.
FIG. 7 illustrates another example PE capable of MAC operations on quantized data, in accordance with various embodiments.
FIG. 8 illustrates yet another example PE capable of MAC operations on quantized data, in accordance with various embodiments.
FIG. 9 illustrates yet another example PE capable of MAC operations on quantized data, in accordance with various embodiments.
FIG. 10 is a flowchart showing a method of deep learning, in accordance with various embodiments.
FIG. 11 is a block diagram of a DNN accelerator, in accordance with various embodiments.
FIG. 12 illustrates a deep learning environment, in accordance with various embodiments.
FIG. 13 is a block diagram of an example DNN system, in accordance with various embodiments.
FIG. 14 is a block diagram of an example computing device, in accordance with various embodiments.

Detailed Description

*Overview*

The last decade has witnessed a rapid rise in AI (artificial intelligence) based data processing, particularly based on DNN. DNNs are widely used in the domains of computer vision, speech recognition, image, and video processing mainly due to their ability to achieve beyond human-level accuracy. DNNs The significant improvements in DNN model size and accuracy coupled with the rapid increase in computing power of execution platforms have led to the adoption of DNN applications even within resource constrained mobile and edge devices that have limited energy availability.

For instance, convolutional neural networks (CNNs) have become highly influential in the field of computer vision and image processing. However, the complex nature of the CNN architectures (e.g., billions of parameters) makes it difficult to deploy them in real time. CNN models require significantly large investment in compute resources and incur huge energy cost. Furthermore, the bandwidth required to load data into the DNN accelerator is a limiting factor when moving weights and activations between the on-chip memory and the PE array. The significant computational complexity comes from the over parameterization of the DNN model, which builds in redundancy and provides an opportunity for optimization. These redundancies can be removed through various hardware and software techniques with little or no loss of accuracy and a significantly reduction in the amount of compute that needs to be performed.

Network-level compression is one of the currently available techniques employed to reduce the size of the neural network model with minimal loss to accuracy. Two popular network compression techniques are pruning and quantization. Neural network pruning is a technique of compression that removes weights from a trained model. The goal is to eliminate these weights without impacting the network performance and accuracy. Quantization approximates a neural network that uses floating-point numbers to a neural network with low bit width numbers, such as integer. This process reduces the memory requirement in terms of storage and bandwidth required to transport the data, thereby reducing the overall energy cost of the DNN accelerator. Furthermore, it reduces the computational resources required to compute with the approximated neural network.

Embodiments of the present disclosure provide DNN accelerators where quantization hardware components are placed in a way that can maximize data reuse and reduce pipeline stages. In various embodiments of the present disclosure, a DNN accelerator can perform quantized convolutions. The DNN accelerator may include PEs that includes hardware components that can perform MAC operations and quantization computation.

An example PE may include quantization subtractors, an input storage unit that may include one or more input register files, a weight storage unit that may include one or more weight register files, and a MAC unit. The quantization subtractors may be placed outside the MAC unit. The quantization subtractors may receive quantized activations and quantized weights. The quantized activations are quantized values of activations for a convolution. The quantized weights are quantized values of weights for the convolution. The activations and weights of the convolution may be floating-point numbers. The quantized activations and quantized weights may be integers. The quantization subtractors may subtract zeropoints from the quantized activations and quantized weights and generate intermediate activations and intermediate weights. The intermediate activations and intermediate weights may be integers.

The intermediate activations and intermediate weights may be stored in the input storage unit and the weight storage unit, respectively. The MAC unit may retrieve the intermediate activations and intermediate weights from the input storage unit and the weight storage unit and perform MAC operations on the input storage unit and the weight storage unit. The MAC unit may include a plurality of multipliers and perform sequential cycles of MAC operations. In a cycle of MAC operations, different multipliers may use different intermediate activations and different intermediate weights. The same intermediate activations or intermediate weights may be used by different multipliers in different cycles. The PE may include or otherwise be associated with a quantization multiplier that can multiply outputs of the MAC unit or outputs of the PE to generate final results that are floating-point numbers.

The placement of the quantization subtractors outside the MAC unit allows the data written into the input storage unit and the weight storage unit is the intermediate activations and intermediate weights, as opposed to the quantized activation and quantized weights. Such placement of the quantization subtractors can facilitate reuse of the intermediate activations and intermediate weights in different cycles of MAC operations by the MAC unit. This negates the necessity of the quantization subtractors computing the intermediate activations and intermediate weights in all these cycles and therefore, can reduce power consumption of the PE. Even though an intermediate activation or intermediate weight may have more bits than a quantized activation or quantized weights, the increase in storage size is minimal as register files are designed to store relatively small numbers of bytes. Moreover, compared with a PE having quantization subtractors placed inside the MAC unit, the PEs in the present disclosure can have less pipeline stages. The reduction of pipeline stages may lead to reduction in the number of pipeline registers needed in the PE. Thus, the present disclosure provides PEs that can improve area and power efficiency of DNN accelerators used for quantization inference.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

*Example DNN*

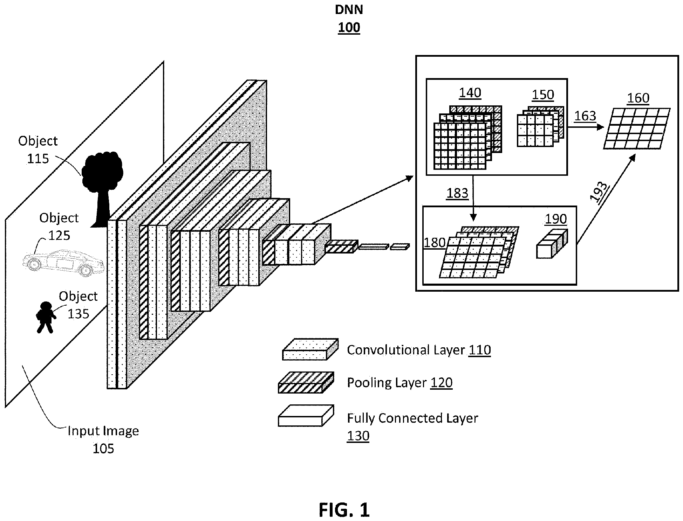

FIG. 1 illustrates an example DNN 100, in accordance with various embodiments. For purpose of illustration, the DNN 100 in FIG. 1 is a CNN. In other embodiments, the DNN 100 may be other types of DNNs. The DNN 100 is trained to receive images and output classifications of objects in the images. In the embodiments of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers. In an inference of the DNN 100, the layers of the DNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the DNN 100 is a convolutional layer 110. In an example, a convolutional layer 110 performs a convolution on an input tensor 140 (also referred to as input feature map (IFM) 140) and a filter 150. As shown in FIG. 1, the IFM 140 is represented by a $7\times7\times3$ three-dimensional (3D) matrix. The IFM 140 includes 3 input channels, each of which is represented by a $7\times7$ two-dimensional (2D) matrix. The $7\times7$ 2D matrix includes 7 input elements (also referred to as input points) in each row and 7 input elements in each column. The filter 150 is represented by a $3\times3\times3$ 3D matrix. The filter 150 includes 3 kernels, each of which may correspond to a different input channel of the IFM 140. A kernel is a 2D matrix of weights, where the weights are arranged in columns and rows. A kernel can be smaller than the IFM. In the embodiments of FIG. 1, each kernel is represented by a $3\times3$ 2D matrix. The $3\times3$ kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a $5\times5$ 2D matrix. The $5\times5$ 2D matrix includes 5 output elements (also referred to as output points) in each row and 5 output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D matrix of output elements. As such, the 2D output matrix (i.e., the OFM 160) from the standard convolution 163 is referred to as an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a $5 \times 5 \times 3$ 3D matrix. The depthwise output tensor 180 includes 3 output channels, each of which is represented by a $5 \times 5$ 2D matrix. The $5 \times 5$ 2D matrix includes 5 output elements in each row and 5 output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a $1 \times 1 \times 3$ tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculate the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has 4 hyperparameters: the number of kernels, the size F kernels (e.g., a kernel is of dimensions $F \times F \times D$ pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presence of features in the patches of the feature maps. A pooling layer 120 is placed between 2 convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is $2 \times 2$ pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of $6 \times 6$ results in an output pooled feature map of $3 \times 3$. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receive an input operand. The input operand defines the output of the convolutional layers 110 and pooling layers 120 and includes the values of the last feature map generated by the last pooling layer 120 in the sequence. The fully connected layers 130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and return an operand of size N, where N is the number of classes in the image classification problem. In the embodiments of FIG. 1, N equals 3, as there are 3 objects 115, 125, and 135 in the input image. Each element of the operand indicates the probability for the input image 105 to belong to a class. To calculate the probabilities, the fully connected layers 130 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 115 being a tree, a second probability indicating the object 125 being a car, and a third probability indicating the object 135 being a person. In other embodiments where the input image 105 includes different objects or a different number of objects, the individual values can be different.

*Example Convolution*

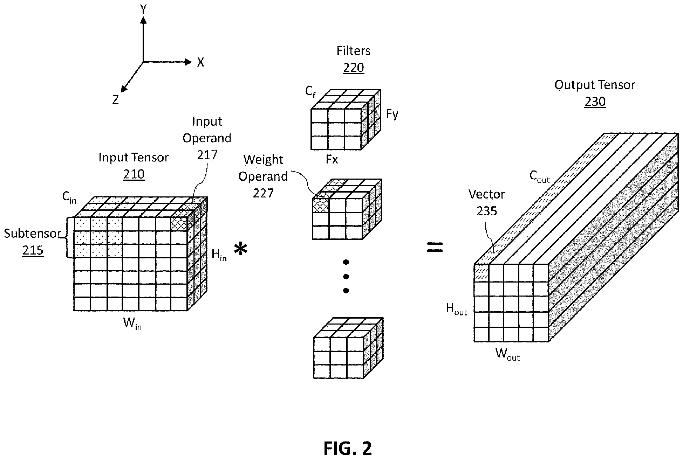

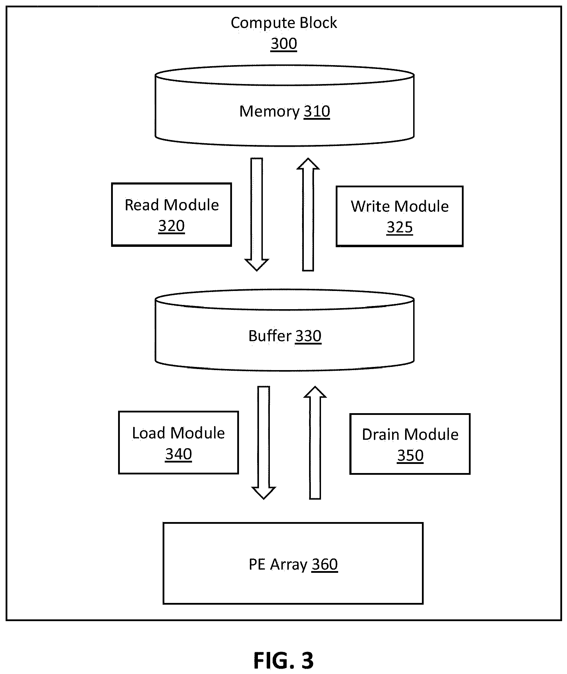

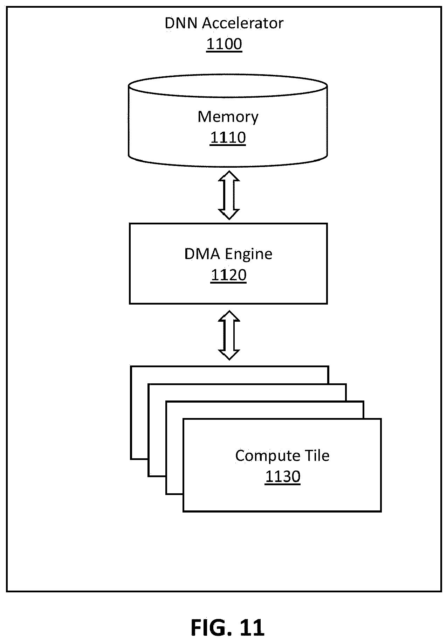

FIG. 2 illustrates an example convolution, in accordance with various embodiments. The convolution may be a convolution in a convolutional layer of a DNN, e.g., a convolutional layer 110 in FIG. 1. The convolution can be executed on an input tensor 210 and filters 220 (individually referred to as "filter 220"). A result of the convolution is an output tensor 230. In some embodiments, the convolution is performed by a DNN accelerator including one or more compute tiles. An example of the DNN accelerator may be the DNN accelerator 1100 in FIG. 11. Examples of the compute tiles may be the compute tiles 1130 in FIG. 11. A compute tile may be a compute block, such as the compute block 300 in FIG. 3.

In the embodiments of FIG. 2, the input tensor 210 includes activations (also referred to as "input activations," "elements," or "input elements") arranged in a 3D matrix. An input element is a data point in the input tensor 210. The input tensor 210 has a spatial size $H_{in} \times W_{in} \times C_{in}$, where $H_{in}$ is the height of the 3D matrix (i.e., the length along the Y axis, which indicates the number of activations in a column in the 2D matrix of each input channel), $W_{in}$ is the width of the 3D matrix (i.e., the length along the X axis, which indicates the number of activations in a row in the 2D matrix of each input channel), and $C_{in}$ is the depth of the 3D matrix (i.e., the length along the Z axis, which indicates the number of input channels). For purpose of simplicity and illustration, the input tensor 210 has a spatial size of $7 \times 7 \times 3$, i.e., the input tensor 210 includes three input channels and each input channel has a $7 \times 7$ 2D matrix. Each input element in the input tensor 210 may be represented by a (X, Y, Z) coordinate. In other embodiments, the height, width, or depth of the input tensor 210 may be different.

Each filter 220 includes weights arranged in a 3D matrix. The values of the weights may be determined through training the DNN. A filter 220 has a spatial size $H_f \times W_f \times C_f$, where $H_f$ is the height of the filter (i.e., the length along the Y axis, which indicates the number of weights in a column in each kernel), $W_f$ is the width of the filter (i.e., the length along the X axis, which indicates the number of weights in a row in each kernel), and $C_f$ is the depth of the filter (i.e., the length along the Z axis, which indicates the number of channels). In some embodiments, $C_f$ equals $C_{in}$. For purpose of simplicity and illustration, each filter 220 in FIG. 2 has a spatial size of $3 \times 3 \times 3$, i.e., the filter 220 includes 3 convolutional kernels with a spatial size of $3 \times 3$. In other embodiments, the height, width, or depth of the filter 220 may be different. The spatial size of the convolutional kernels is smaller than the spatial size of the 2D matrix of each input channel in the input tensor 210.

An activation or weight may take one or more bytes in a memory. The number of bytes for an activation or weight may depend on the data format. For example, when the activation or weight has a INT8 format, the activation takes one byte. When the activation or weight has a FP16 format, the activation or weight takes two bytes. Other data formats may be used for activations or weights.

In the convolution, each filter 220 slides across the input tensor 210 and generates a 2D matrix for an output channel in the output tensor 230. In the embodiments of FIG. 2, the 2D matrix has a spatial size of $5 \times 5$. The output tensor 230 includes activations (also referred to as "output activations," "elements," or "output element") arranged in a 3D matrix. An output activation is a data point in the output tensor 230. The output tensor 230 has a spatial size $H_{out} \times W_{out} \times C_{out}$, where $H_{out}$ is the height of the 3D matrix (i.e., the length along the Y axis, which indicates the number of output activations in a column in the 2D matrix of each output channel), $W_{out}$ is the width of the 3D matrix (i.e., the length along the X axis, which indicates the number of output activations in a row in the 2D matrix of each output channel), and $C_{out}$ is the depth of the 3D matrix (i.e., the length along the Z axis, which indicates the number of output channels). $C_{out}$ may equal the number of filters 220 in the convolution. $H_{out}$ and $W_{out}$ may depend on the heights and weights of the input tensor 210 and each filter 220.

As a part of the convolution, MAC operations can be performed on a $3 \times 3 \times 3$ subtensor 215 (which is highlighted with a dotted pattern in FIG. 2) in the input tensor 210 and each filter 220. The result of the MAC operations on the subtensor 215 and one filter 220 is an output activation. In some embodiments (e.g., embodiments where the convolution is an integral convolution), an output activation may include 8 bits, e.g., one byte. In other embodiments (e.g., embodiments where the convolution is a floating-point convolution), an output activation may include more than one byte. For instance, an output element may include two bytes.

After the MAC operations on the subtensor 215 and all the filters 220 are finished, a vector 235 is produced. The vector 235 is highlighted with slashes in FIG. 2. The vector 235 includes a sequence of output activations, which are arranged along the Z axis. The output activations in the vector 235 have the same (x, y) coordinate, but the output activations correspond to different output channels and have different Z coordinates. The dimension of the vector 235 along the Z axis may equal the total number of output channels in the output tensor 230. After the vector 235 is produced, further MAC operations are performed to produce additional vectors till the output tensor 230 is produced.

In some embodiments, the MAC operations on a 3×3×3 subtensor (e.g., the subtensor 215) and a filter 220 may be performed by a plurality of PEs. One or more PEs may receive an input operand (e.g., an input operand 217 shown in FIG. 2) and a weight operand (e.g., the weight operand 227 shown in FIG. 2). The input operand 217 includes a sequence of activations having the same (x, y) coordinate but different z coordinates. The input operand 217 includes an activation from each of the input channels in the input tensor 210. The weight operand 227 includes a sequence of weights having the same (x, y) coordinate but different z coordinates. The weight operand 227 includes a weight from each of the channels in the filter 220. Activations in the input operand 217 and weights in the weight operand 227 may be sequentially fed into a PE. The PE may receive a pair of an activation and a weight at a time and multiple the activation and the weight. The position of the activation in the input operand 217 may match the position of the weight in the weight operand 227. The activation and weight may correspond to the same channel.

Activations or weights may be floating-point numbers. Floating-point numbers may have various data formats, such as FP32, FP16, BF16, and so on. A floating-point number may be a positive or negative number with a decimal point. A floating-point number may be represented by a sequence of bits that includes one or more bits representing the sign of the floating-point number (e.g., positive or negative), bits representing an exponent of the floating-point number, and bits representing a mantissa of the floating-point number. The mantissa is the part of a floating-point number that represents the significant digits of that number. The mantissa is multiplied by the base raised to the exponent to give the actual value of the floating-point number.

The DNN accelerator may facilitate quantized inference where floating-point numbers can be transformed to quantized values. A quantized value is an integer number. The quantization scheme is implemented using integer-only arithmetic during inference, which allows DNN accelerator to build efficient arithmetic operators in hardware to accelerate compute using quantized values. In some embodiments, the transformation of a real number (which is a floating-point number) to a quantized value may be denoted as:

$$r = S(q - Z)$$

where r is the real number; q is the quantized value, which is an integer; S is a constant, which is a floating-point number and may be referred to as a scale or quantization scale; Z is another constant, which is an integer and may be referred to as a zeropoint. The value of the zeropoint Z is the quantized value q in embodiments where the real number r has a value of zero.

The transformation from a quantized value *q* to a real number *r* may be referred to quantization transformation. In some embodiments, the subtraction of the zeropoint *Z* from the quantized value *q* is referred to as quantization subtraction. A subtractor that performs quantization subtraction may be referred to as a quantization subtractor. The multiplication of the result of the quantization subtraction (i.e., *q - Z*) with the scale *S* may be referred to as quantization multiplication. A multiplier that performs quantization multiplication may be referred to as a quantization multiplier.

In some embodiments, to improve efficiency of DNN inference, a DNN accelerator may perform quantized convolutions in which activations and weight are quantized from floating-point values to integer values. The DNN accelerator may take quantized activation and quantized weights as inputs. A quantized activation may be the quantized value of a real number activation. A quantized weight may be the quantized value of a real number weight. The DNN accelerator may also use scales and zeropoints of the activation and weights to compute convolution results that have floating-point values. The computation of the final convolution results includes both MAC operations and quantization transformations.

In some embodiments, a quantization subtraction may be performed before an MAC operation, and the quantization multiplication may be performed after or in the middle of the MAC operation. In some embodiments, a PE may include or otherwise be associated with one or more quantization subtractors or one or more quantization multipliers. The locations of the quantization subtractors or the quantization multipliers may affect data storage, data transfer, or data reuse in the execution of the convolution by the DNN accelerator and therefore, can affect the performance and efficiency of the DNN accelerator. More details regarding DNN accelerator and quantized convolution are described below in conjunction with FIGS. 3-10.

*Example Compute Block*

FIG. 3 is a block diagram of a compute block 300, in accordance with various embodiments. The compute block 300 performs computation for deep learning operations, such as convolution, pooling operation, elementwise operation, and so on. The compute block 300 may run a DNN layer, or a portion of the DNN layer. In some embodiments, the compute block 300 may operate in parallel with one or more other compute blocks for running a convolution. The compute block 300 may be a compute tile in a DNN accelerator, e.g., the DNN accelerator 1100. As shown in FIG. 3, the compute block 300 includes a memory 310, a read module 320, a write module 325, a buffer 330, a load module 340, a drain module 350, and a PE array 360. In other embodiments, alternative configurations, different or additional components may be included in the compute block 300. For instance, the compute block 300 may include more than one memory 310 or buffer 330. Further, functionality attributed to a component of the compute block 300 may be accomplished by a different component included in the compute block 300 or by a different system.

The memory 310 is local to the compute block 300. In the embodiments of FIG. 3, the memory 310 is inside the compute block 300. In other embodiments, the memory 310 may be outside the compute block 300. The memory 310 and the compute block 300 can be implemented on the same chip. The memory 310 stores data used for or generated from convolutions, e.g., input activations, weights, and output activations. In some embodiments, the memory 310 includes one or more SRAMs (static random-access memories). The memory 310 may be byte-addressable, and each memory address identifies a single byte (eight bits) of storage.

In some embodiments, the memory 310 may include data banks. The number of data banks in the memory 310 may be 128, 256, 512, 1024, 2048, and so on. A data bank may include a plurality of storage units. In an example, a data bank may include 8, 16, 64, or a different number of storage units. A storage unit may have a memory address. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the memory 310 in a single reading cycle. In other embodiments, 16 bits can be transferred from the memory 310 in multiple reading cycles, such as two cycles.

The read module 320 reads data (e.g., input activations, weights, etc.) from the memory 310 into the buffer 330. The write module 325 writes data (e.g., output activations, etc.) from the buffer 330 into the memory 310. The buffer 330 temporarily stores data that is transferred between the memory 310 and the PE array 360. The buffer 330 can facilitate data transfer between the memory 310 and the PE array 360 despite a difference between a rate that data can be received and a rate that data can be processed. In some embodiments, the storage capacity of the buffer 330 may be smaller than the storage capacity of the buffer 330 may be smaller than the storage capacity of the memory 310. In an example, the buffer 330 includes an array of bytes. The number of bytes in the array may define a width of the buffer 330.

The width of the buffer may be 16, 32, 64, 128, and so on.

The load module 340 loads data from the buffer 330 into the PE array 360 and the data is to be used by the PE array 360 for MAC operations. In some embodiments, the load module 340 may transfer input activations into an input storage unit in the PE array 360. The input storage unit may include one or more register files for storing input activations to be used for MAC operations. The load module 340 may also transfer weights into a weight storage unit in the PE array 360. The weight storage unit may include one or more register files for storing weights to be used for MAC operations. The drain module 350 can transfer data generated by the PE array 360 into the buffer 330. The data maybe results of MAC operations performed by the PE array 360, such as output activations.

The PE array 360 includes PEs arranged in columns, or columns and rows. Each PE can perform MAC operations. In some embodiments, a PE includes a multiply unit for performing multiplications. An PE may also include an accumulate unit for performing accumulations. A column of PEs is referred to as a PE column. A PE column may be associated with one or more MAC lanes. A MAC lane is a path for loading data into a MAC column. A MAC lane may be also referred to as a data transmission lane or data loading lane. A PE column may have multiple MAC lanes. The loading bandwidth of the MAC column is an aggregation of the loading bandwidths of all the MAC lanes associated with the MAC column. With a certain number of MAC lanes, data can be fed into the same number of independent PEs simultaneously. In some embodiments where a MAC column has four MAC lanes for feeding activations or weights into the MAC column and each MAC lane may have a bandwidth of 16 bytes, the four MAC lanes can have a total loading bandwidth of 64 bytes.

In some embodiments, the PE array 360 may be capable of depthwise convolution, standard convolution, or both. In a depthwise convolution, a PE may perform an MAC operation that include a sequence of multiplications for an input operand and a weight operand. Each multiplication in the sequence (also referred to as a cycle) is a multiplication of a different activation in the input operand with a different weight in the weight operand. The activation and weight in the same cycle may correspond to the same channel. The sequence of multiplication produces a product operand that includes a sequence of products. The MAC operation may also include accumulations in which multiple product operands are accumulated to produce an output operand of the PE. The PE array 360 may output multiple output operands at a time, each of which is generated by a different PE. In a standard convolution, MAC operations may include accumulations across the channels. For instance, as opposed to generating an output operand, a PE may accumulate products across different channels to generate a single output point.

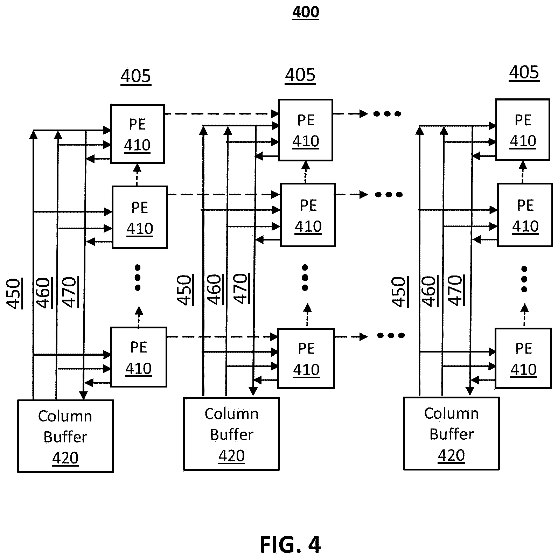

The PE array 360 can perform quantized MAC operations. In some embodiments, the PE array 360 includes quantization subtractors that can subtract zeropoints from quantized values. The results of the quantization subtractions may be used for MAC operations. The PE array 360 may also include one or more quantization multipliers that can multiply scales with results of MAC operations. The outputs of the PE array 360 may be real numbers. More details regarding PE array and PE are provided below in conjunction with FIGS. 4-9.

In embodiments of FIG. 3, the memory 310 and the buffer 330 store quantized activations and weights, which are provided to the PE array 360. The PE array 360 may perform quantization subtractions on the quantized activations and weights and their zeropoints before MAC operations. The PE array 360 may perform quantization multiplications in the middle of or after the MAC operations to produce results having floating-point values. Compared with compute blocks that performs quantization subtractions before activations and weights are stored in the memory 310 or the buffer 330, less data storage in the memory 310 or the buffer 330 is required for the compute block 300.

As an example, a quantized value (e.g., quantized activation or quantized weight) may be stored as a byte, i.e., eight bits. However, a result of a quantization subtraction may need nine bits. The extra bit may be needed for indicating whether the result is a negative value, e.g., in embodiments where the zeropoint is greater than the quantized value. In an embodiment where each data bank in the memory 310 includes 16 bytes for storing quantized values, the nine-bit extension from the quantization subtraction will cause each of the data banks to expand from 16 bytes to 18 bytes. As the number of data banks in the memory 310 can be very large (e.g., 1024, etc.), the cost for data storage can be significantly increased. Similarly, in an embodiment where the buffer 330 has a width of 64 bytes for storing quantized values, the width of the buffer 330 will have to be increased to 72 bytes. By placing the quantization subtractors in the PE array 360, the significant increase in the cost of data storage can be avoided.

*Example PE Array*

FIG. 4 illustrates a PE array, in accordance with various embodiments. The PE array 400 may be an embodiment of the PE array 360 in FIG. 3. The PE array 400 includes a plurality of PEs 410 (individually referred to as "PE 410"). The PEs 410 perform MAC operations. The PEs 410 may also be referred to as neurons in the DNN. Each PE 410 has two input signals 450 and 460 and an output signal 470. The input signal 450 is at least a portion of an IFM to the layer. The input signal 460 is at least a portion of a filter of the layer. In some embodiments, the input signal 450 of a PE 410 includes one or more input operands, and the input signal 460 includes one or more weight operand.

Each PE 410 performs an MAC operation on the input signals 450 and 460 and outputs the output signal 470, which is a result of the MAC operation. Some or all of the input signals 450 and 460 and the output signal 470 may be in an integer format, such as INT8, or FP format, such as FP16 or BF16. For purpose of simplicity and illustration, the input signals and output signal of all the PEs 410 have the same reference numbers, but the PEs 410 may receive different input signals and output different output signals from each other. Also, a PE 410 may be different from another PE 410, e.g., including more, fewer, or different components.

As shown in FIG. 4, the PEs 410 are connected to each other, as indicated by the dash arrows in FIG. 4. The output signal 470 of an PE 410 may be sent to many other PEs 410 (and possibly back to itself) as input signals via the interconnections between PEs 410. In some embodiments, the output signal 470 of an PE 410 may incorporate the output signals of one or more other PEs 410 through an accumulate operation of the PE 410 and generates an internal partial sum of the PE array. More details about the PEs 410 are described below in conjunction with FIG. 4B.

In the embodiments of FIG. 4, the PEs 410 are arranged into columns 405 (individually referred to as "column 405"). The input and weights of the layer may be distributed to the PEs 410 based on the columns 405. Each column 405 has a column buffer 420. The column buffer 420 stores data provided to the PEs 410 in the column 405 for a short amount of time. The column buffer 420 may also store data output by the last PE 410 in the column 405. The output of the last PE 410 may be a sum of the MAC operations of all the PEs 410 in the column 405, which is a column-level internal partial sum of the PE array 400. In other embodiments, input and weights may be distributed to the PEs 410 based on rows in the PE array 400. The PE array 400 may include row buffers in lieu of column buffers 420. A row buffer may store input signals of the PEs in the corresponding row and may also store a row-level internal partial sum of the PE array 400.

In some embodiments, a column buffer 420 may be a portion of the buffer 330 in FIG. 3. The column buffer 420 may be associated with upper memory hierarchies, e.g., the memory 310 in FIG. 3. Data in the column buffer 420 may be sent to the upper memory hierarchies. The column buffer 420 may receive data from the upper memory hierarchies.

*Example PEs*

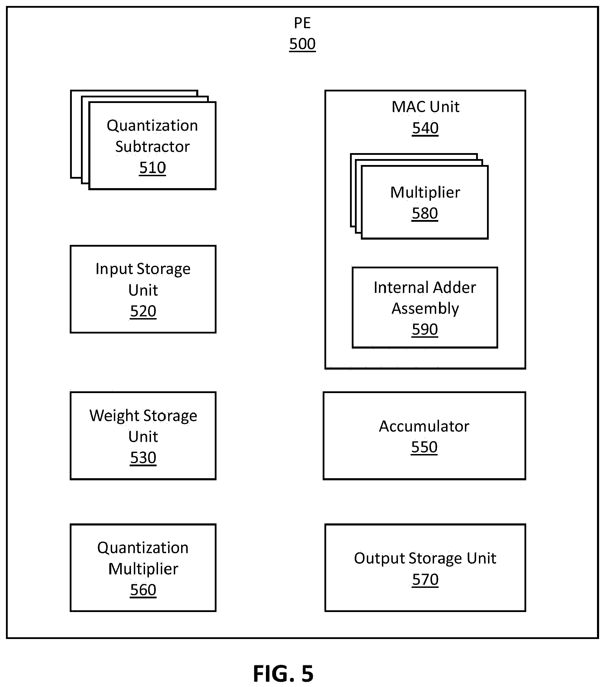

FIG. 5 is a block diagram of a PE 500, in accordance with various embodiments. The PE 500 facilitates quantized convolutions and can perform MAC operation and quantization transformations. The PE 500 may be an embodiment of the PE 410 in FIG. 4 or an embodiment of a PE in the PE array 360 in FIG. 3. As shown in FIG. 5, the PE 500 includes quantization subtractors 510 (individually referred to as "quantization subtractor 510"), an input storage unit 520, a weight storage unit 530, an MAC unit 540, an accumulator 550, a quantization multiplier 560, and an output storage unit 570. In other embodiments, alternative configurations, different or additional components may be included in the PE 500. For instance, the PE 500 may include pipeline registers for facilitating pipeline stages in MAC operations of the PE 500. The PE 500 may include more than one quantization multiplier 560. The quantization multiplier 560 may be placed outside the PE 500 or placed inside the MAC unit 540. Also, the accumulator 550 may be placed inside the MAC unit 540. Further, functionality attributed to a component of the PE 500 may be accomplished by a different component included in the PE 500, a different component included in a PE array where the PE 500 is placed, or by a different system.

The quantization subtractors 510 subtracts zeropoints from quantized values. In some embodiments, the quantization subtractors 510 may receive quantized activations and quantized weights from a data storage unit, e.g., the buffer 330 in FIG. 3. The quantization subtractors 510 may also receive zeropoints from the data storage unit. Some of the quantization subtractors 510 may subtract the zeropoint for the quantized activations ("activation zeropoint") from the quantized activations and generate intermediate activations. An intermediate activation equals the result of subtracting the activation zeropoint from a quantized activation. Some of the quantization subtractors 510 may subtract the zeropoint for the quantized weights ("weight zeropoint") from the quantized weights and generate intermediate weights. An intermediate weight equals the result of subtracting the weight zeropoint from a quantized weight.

An intermediate activation or intermediate weight may be a positive value (e.g., in embodiments where the zeropoint is smaller than the quantized activation or quantized weight) or a negative value (e.g., in embodiments where the zeropoint is greater than the quantized activation or quantized weight). In embodiments where an intermediate activation or intermediate weight is a positive value, the intermediate activation or intermediate weight may have eight bits. In embodiments where an intermediate activation or intermediate weight is a negative value, the intermediate activation or intermediate weight may have nine bits.

In some embodiments, the quantization subtractors 510 constitute one or more quantization subtractor pairs. A quantization subtractor pair includes a first quantization subtractor for computing one or more intermediate activations and a second quantization subtractor for computing one or more intermediate weights. A quantization subtractor pair may correspond to a multiplier 580 in the MAC unit 540 and compute intermediate activations and intermediate weights to be multiplied by the multiplier 580.

The input storage unit 520 stores intermediate activations computed by at least some of the quantization subtractors 510. In some embodiments, the input storage unit 520 may include one or more input register files. An input register file may be coupled to one or more multipliers 580 in the MAC unit 540. Data stored in the input register file may be fed into the multipliers 580. In some embodiments, the number of input register files in the input storage unit 520 may equal the number of multipliers 580 in the MAC unit 540, and each multiplier 580 may be associated with a different input register file. The storage capacity of an input register file may be smaller than the storage capacity of the buffer 330 in FIG. 3. Intermediate activations stored in the input storage unit 520 may be reused (by the same multiplier 580 or different multipliers 580) in different cycles of MAC operations by the PE 500. The intermediate activations for an input operand may be computed once by the quantization subtractors 510 and may be reused in all cycles of MAC operations on the input operand. The reuse of the intermediate activations can eliminate the generate of the intermediate activations in every cycle of MAC operations by the PE 500 and can therefore, reduce power consumption.

The weight storage unit 530 stores intermediate weights computed by at least some of the quantization subtractors 510. In some embodiments, the weight storage unit 530 may include one or more weight register files. A weight register file may be coupled to one or more multipliers 580 in the MAC unit 540. Data stored in the weight register file may be fed into the multipliers 580. In some embodiments, the number of weight register files in the weight storage unit 530 may equal the number of multipliers 580 in the MAC unit 540, and each multiplier 580 may be associated with a different weight register file. The storage capacity of a weight register file may be smaller than the storage capacity of the buffer 330 in FIG. 3. Intermediate weights stored in the weight storage unit 530 may be reused (by the same multiplier 580 or different multipliers 580) in different cycles of MAC operations by the PE 500. The intermediate weights for a weight operand may be computed once by the quantization subtractors 510 and may be reused in all cycles of MAC operations on the weight operand. The reuse of the intermediate weights can eliminate the generate of the intermediate weights in every cycle of MAC operations by the PE 500 and can therefore, reduce power consumption.

The MAC unit 540 performs MAC operations on intermediate activations and intermediate weights stored in the input storage unit 520 and the weight storage unit 530, respectively. The MAC unit 540 includes multipliers 580 and an internal adder assembly 590. The multipliers 580 may operate in parallel to process multiple intermediate activations and multiple intermediate weights in a cycle. A multiplier may multiple an intermediate activation and an intermediate weight at a time. The intermediate activation and intermediate weight may correspond to the same input channel. The position of the intermediate activation in the input operand and the position of the intermediate weight in the weight operand may match. The products computed by the multipliers 580 are provided to the internal adder assembly 590.

The internal adder assembly 590 includes one or more adders. In some embodiments, the adders may be arranged in tiers. The first tier may include two or more adders. Each adder in the first tier may receive products from two or more multipliers 580 and compute a sum ("first sum") of the products. Each adder in the second tier may add sums computed by two or more adders in the first tier and generate a second sum. In embodiments where the internal adder assembly 590 includes more than two tiers, an adder in the third tier may add sums computed by two or more adders in the second tier and generate a third sum. This may continue until the last tier is finished. The last tier may include one adder, which compute the output of the internal adder assembly 590. The output of the internal adder assembly 590 may be an integer number. The output of the internal adder assembly 590 may constitute the output of the MAC unit 540.

The accumulator 550 accumulates an output of the PE 500 with an output of another PE and generates an internal partial sum of the PE array where the PE 500 and the other PE are placed. In some embodiments, the output of the other PE may be stored in the output storage unit 570. After the accumulator 550 computes the internal partial sum, the output of the other PE may be replaced with the internal partial sum in the output storage unit 570. In some embodiments, the output of the PE 500 may be an output of the MAC unit 540 or an output of the quantization multiplier 560.

The quantization multiplier 560 perform quantization multiplications to convert integer numbers to floating-point numbers. The quantization multiplier 560 may multiply outputs of the internal adder assembly 590 or output of the accumulator 550 with a quantization scale. In some embodiments (e.g., embodiments where the quantization multiplier 560 is placed before the accumulator 550), the quantization multiplier 560 may receive outputs of the internal adder assembly 590 and multiple the outputs of the internal adder assembly 590 with one or more quantization scales. The results of the quantization multiplications are floating-point numbers. The floating-point numbers may be provided to the accumulator 550 for being accumulated with other floating-point numbers, e.g., floating-point numbers computed by another PE. The accumulator 550 may be a floating-point accumulator.

In other embodiments (e.g., embodiments where the quantization multiplier 560 is placed after the accumulator 550), the quantization multiplier 560 may receive outputs of the accumulator 550 and multiple the outputs of the accumulator 550 with one or more quantization scales. The accumulator 550 may be an integer accumulator. The results of the quantization multiplications by the quantization multiplier 560 are floating-point numbers. The floating-point numbers may be provided and stored in the output storage unit 570.

The output storage unit 570 stores outputs of the PE 500. An output of the PE 500 may be a floating-point number, e.g., in embodiments where the quantization multiplier 560 is placed inside the PE 500. In other embodiments (e.g., embodiments where the quantization multiplier 560 is placed outside the PE 500), an output of the PE 500 may be an integer. The output storage unit 570 may include one or more register files.

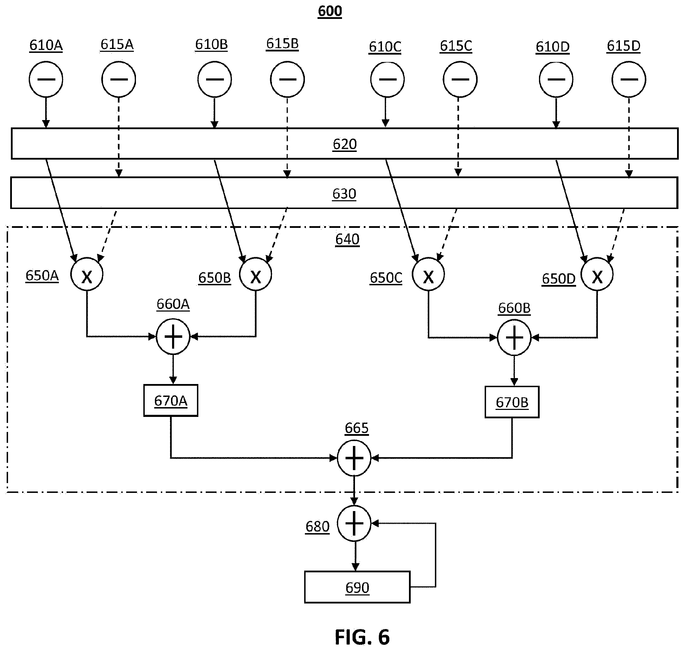

FIG. 6 illustrates an example PE 600 capable of MAC operations on quantized data, in accordance with various embodiments. The PE 600 may be an embodiment of the PE 500 in FIG. 5. The PE 600 includes quantization subtractors 610A-D (collectively referred to as "quantization subtractors 610" or "quantization subtractor 610"), quantization subtractors 615A-D (collectively referred to as "quantization subtractors 615" or "quantization subtractor 615"), an input storage unit 620, a weight storage unit 630, an MAC unit 640, an accumulator 680, and an output storage unit 690. The MAC unit 640 includes multipliers 650A-D (collectively referred to as "multipliers 650" or "multiplier 650"), adders 660A and 660B, pipeline registers 670A and 670B, and an adder 665.

In other embodiments, alternative configurations, different or additional components may be included in the PE 600. Further, functionality attributed to a component of the PE 600 may be accomplished by a different component included in the PE 600, a different component included in a PE array where the PE 600 is placed, or by a different system. The positions of the components of the PE 600 in FIG. 6 are for the purpose of illustration only. Even though the positions of the components may reflect the direction of data flow in the PE 600, the positions of the components in FIG. 6 do not necessarily represent physical positions of the components in the PE 600.

The PE 600 may perform sequential cycles of MAC operations. In a cycle of MAC operations, the PE 600 may process multiple input operand and multiple weight operands, e.g., given the presence of multiple multipliers 650 in the MAC unit 640. Each quantization subtractor 610 may subtract an activation zeropoint from quantized activations of an input operand and generates intermediate activations. The intermediate activations are provided to the input storage unit 620 and stored in the input storage unit 620. The input storage unit 620 may store intermediate activations of up to four input operands in the cycle of MAC operations. Each quantization subtractor 615 may subtract a weight zeropoint from quantized weights of a weight operand and generates intermediate weights. The intermediate weights are provided to the weight storage unit 630 and stored in the weight storage unit 630. The weight storage unit 630 may store intermediate weights of up to four weight operands in the cycle of MAC operations. The quantization subtractors 610 and 615 may be examples of the quantization subtractors 510 in FIG. 5. The input storage unit 620 may be an example of the input storage unit 520 in FIG. 5. The weight storage unit 630 may be an example of the weight storage unit 530 in FIG. 5.

The multipliers 650 fetches intermediate activations and intermediate weights from the input storage unit 620 and weight storage unit 630 and compute intermediate products. In an example round, the multiplier 650A receives the intermediate activation computed by the quantization subtractor 610A and the intermediate weight computed by the quantization subtractor 615A, the multiplier 650B receives the intermediate activation computed by the quantization subtractor 610B and the intermediate weight computed by the quantization subtractor 615B, the multiplier 650C receives the intermediate activation computed by the quantization subtractor 610C and the intermediate weight computed by the quantization subtractor 615C, and the multiplier 650D receives the intermediate activation computed by the quantization subtractor 610D and the intermediate weight computed by the quantization subtractor 615D.

In other cycles, the intermediate activations and intermediate weights may be used by different multipliers 650. For instance, in a subsequent round, the multiplier 650A may receive the intermediate activation computed by the quantization subtractor 610B and the intermediate weight computed by the quantization subtractor 615A, the multiplier 650B may receive the intermediate activation computed by the quantization subtractor 610C and the intermediate weight computed by the quantization subtractor 615B, the multiplier 650C may receive the intermediate activation computed by the quantization subtractor 610D and the intermediate weight computed by the quantization subtractor 615C. The intermediate activations and intermediate weights from the input storage unit 620 and weight storage unit 630 may be reused more than once.

Storing the intermediate activations and intermediate weights in the input storage unit 620 and weight storage unit 630 can therefore facilitate reuse of the intermediate activations and intermediate weights within multiple cycles of MAC operations by the MAC unit 640. The quantization subtractors 610 and 615 can compute the intermediate activations and intermediate weights in a single cycle and do not need to re-compute the intermediate activations and intermediate weights in other cycles where the intermediate activations and intermediate weights are used. Therefore, the power needed by the quantization subtractors 610 and 615 can be minimized.

The adders 660A, 660B, and 665 constitute an internal adder assembly of the MAC unit 640. The adder 660A receives products computed by the multiplier 650A and 650B and produces a first sum. The adder 660B receives products computed by the multiplier 650C and 650D and produces a second sum. The first sum and the second sum can be stored in the pipeline registers 670A and 670B, respectively, which can facilitate retiming of the pipeline stage before the sums are further accumulated by the adder 665. For instance, the process of generating the first sum may take a different amount of time from the process of generating the second time. The presence of the pipeline registers 670A and 670B can facilitate synchronization of the delivery of the first sum and the second sum to the adder 665. In an embodiment where the generation of the first sum takes longer than the generation of the second sum, the first sum may be stored in the pipeline register 670A till when or after the second sum is generated.

The adder 665 receives the first sum and the second sum from the pipeline registers 670A and 670B and accumulate the sums to generate an output of the MAC unit 640. The output of the MAC unit 640 is further provided to the accumulator 680. The accumulator 680 may accumulate the output of the MAC unit 640 with a value stored in the output storage unit 690. The value may be an output of another PE 600, which has been sent to the PE 600 and stored in the output storage unit 690. The output of the accumulator 680 can be stored in the output storage unit 690.

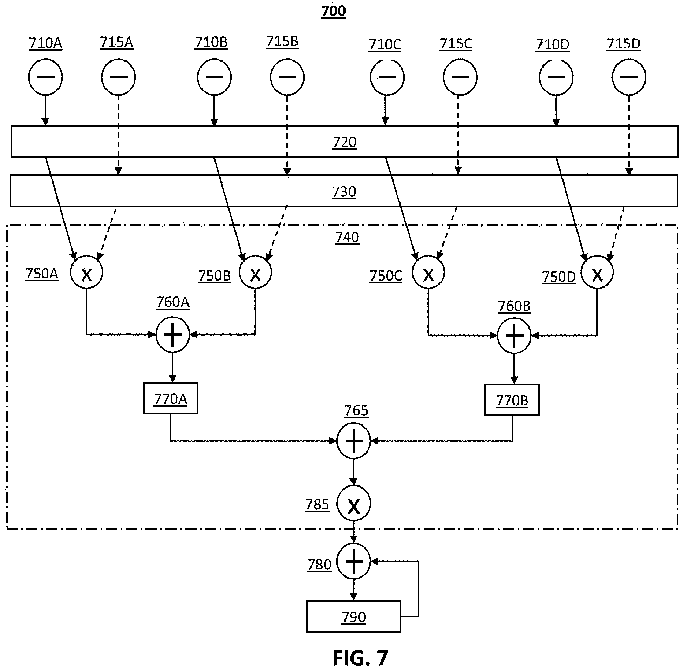

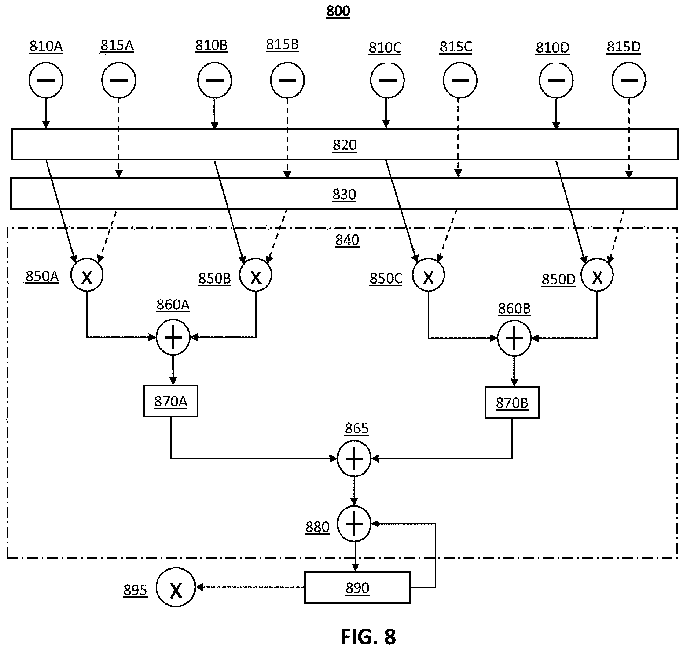

Even though not shown in FIG. 6, the MAC operation by the PE 600 may include or be otherwise associated with a quantization multiplication. The quantization multiplication may be performed by a quantization multiplier that can be placed in the MAC unit 640, outside the MAC unit 640 but inside the PE 600, or outside the PE 600. More details regarding quantization multiplier are described below in conjunction with FIGS. 7 and 8.

FIG. 7 illustrates another example PE 700 including a quantization multiplier 785, in accordance with various embodiments. The PE 700 may be an embodiment of the PE 500 in FIG. 5. The PE 700 also includes quantization subtractors 710A-D (collectively referred to as "quantization subtractors 710" or "quantization subtractor 710"), quantization subtractors 715A-D (collectively referred to as "quantization subtractors 715" or "quantization subtractor 715"), an input storage unit 720, a weight storage unit 730, an MAC unit 740, an accumulator 780, and an output storage unit 790. The MAC unit 740 includes multipliers 750A-D (collectively referred to as "multipliers 750" or "multiplier 750"), adders 760A and 760B, pipeline registers 770A and 770B, and an adder 765.

In other embodiments, alternative configurations, different or additional components may be included in the PE 700. Further, functionality attributed to a component of the PE 700 may be accomplished by a different component included in the PE 700, a different component included in a PE array where the PE 700 is placed, or by a different system. The positions of the components of the PE 700 in FIG. 7 are for the purpose of illustration only. Even though the positions of the components may reflect the direction of data flow in the PE 700, the positions of the components in FIG. 7 do not necessarily represent physical positions of the components in the PE 700.

The PE 700 may perform sequential cycles of MAC operations. In a cycle of MAC operations, the PE 700 may process multiple input operand and multiple weight operands, e.g., given the presence of multiple multipliers 750 in the MAC unit 740. Each quantization subtractor 710 may subtract an activation zeropoint from quantized activations of an input operand and generates intermediate activations. The intermediate activations are provided to the input storage unit 720 and stored in the input storage unit 720. The input storage unit 720 may store intermediate activations of up to four input operands in the cycle of MAC operations. Each quantization subtractor 715 may subtract a weight zeropoint from quantized weights of a weight operand and generates intermediate weights. The intermediate weights are provided to the weight storage unit 730 and stored in the weight storage unit 730. The weight storage unit 730 may store intermediate weights of up to four weight operands in the cycle of MAC operations. The quantization subtractors 710 and 715 may be examples of the quantization subtractors 510 in FIG. 5. The input storage unit 720 may be an example of the input storage unit 520 in FIG. 5. The weight storage unit 730 may be an example of the weight storage unit 530 in FIG. 5.

The multipliers 750 fetches intermediate activations and intermediate weights from the input storage unit 720 and weight storage unit 730 and compute intermediate products. In an example round, the multiplier 750A receives the intermediate activation computed by the quantization subtractor 710A and the intermediate weight computed by the quantization subtractor 715A, the multiplier 750B receives the intermediate activation computed by the quantization subtractor 710B and the intermediate weight computed by the quantization subtractor 715B, the multiplier 750C receives the intermediate activation computed by the quantization subtractor 710C and the intermediate weight computed by the quantization subtractor 715C, and the multiplier 750D receives the intermediate activation computed by the quantization subtractor 710D and the intermediate weight computed by the quantization subtractor 715D.

In other cycles, the intermediate activations and intermediate weights may be used by different multipliers 750. For instance, in a subsequent round, the multiplier 750A may receive the intermediate activation computed by the quantization subtractor 710B and the intermediate weight computed by the quantization subtractor 715A, the multiplier 750B may receive the intermediate activation computed by the quantization subtractor 710C and the intermediate weight computed by the quantization subtractor 715B, the multiplier 750C may receive the intermediate activation computed by the quantization subtractor 710D and the intermediate weight computed by the quantization subtractor 715C. The intermediate activations and intermediate weights from the input storage unit 720 and weight storage unit 730 may be reused more than once.

Storing the intermediate activations and intermediate weights in the input storage unit 720 and weight storage unit 730 can therefore facilitate reuse of the intermediate activations and intermediate weights within multiple cycles of MAC operations by the MAC unit 740. The quantization subtractors 710 and 715 can compute the intermediate activations and intermediate weights in a single cycle and do not need to re-compute the intermediate activations and intermediate weights in other cycles where the intermediate activations and intermediate weights are used. Therefore, the power needed by the quantization subtractors 710 and 715 can be minimized.

The adders 760A, 760B, and 765 constitute an internal adder assembly of the MAC unit 740. The adder 760A receives products computed by the multiplier 750A and 750B and produces a first sum. The adder 760B receives products computed by the multiplier 750C and 750D and produces a second sum. The first sum and the second sum can be stored in the pipeline registers 770A and 770B, respectively, which can facilitate retiming of the pipeline stage before the sums are further accumulated by the adder 765. For instance, the process of generating the first sum may take a different amount of time from the process of generating the second time. The presence of the pipeline registers 770A and 770B can facilitate synchronization of the delivery of the first sum and the second sum to the adder 765. In an embodiment where the generation of the first sum takes longer than the generation of the second sum, the first sum may be stored in the pipeline register 770A till when or after the second sum is generated.

The adder 765 receives the first sum and the second sum from the pipeline registers 770A and 770B and accumulate the sums to generate a third sum. The third sum is the output of the internal adder assembly. The third sum is an integer. The third sum is provided to the quantization multiplier 785. The quantization multiplier 785 multiplies the third sum with a quantization scale and computes a real number, which has a floating-point value. The real number may be the output of the MAC unit 740.

The real number is further provided to the accumulator 780. The accumulator 780 may accumulate the real number with another real number stored in the output storage unit 790. The other real number may be an output of another PE 700, which has been sent to the PE 700 and stored in the output storage unit 790. The output of the accumulator 780 can be stored in the output storage unit 790.

FIG. 8 illustrates an example PE 800 associated with a quantization multiplier 895, in accordance with various embodiments. The quantization multiplier 895 may either be inside or outside the PE 800. The PE 800 may be an embodiment of the PE 500 in FIG. 5. The PE 800 includes quantization subtractors 810A-D (collectively referred to as "quantization subtractors 810" or "quantization subtractor 810"), quantization subtractors 815A-D (collectively referred to as "quantization subtractors 815" or "quantization subtractor 815"), an input storage unit 820, a weight storage unit 830, an MAC unit 840, an accumulator 880, and an output storage unit 890. The MAC unit 840 includes multipliers 850A-D (collectively referred to as "multipliers 850" or "multiplier 850"), adders 860A and 860B, pipeline registers 870A and 870B, and an adder 865.

In other embodiments, alternative configurations, different or additional components may be included in the PE 800. Further, functionality attributed to a component of the PE 800 may be accomplished by a different component included in the PE 800, a different component included in a PE array where the PE 800 is placed, or by a different system. The positions of the components of the PE 800 in FIG. 8 are for the purpose of illustration only. Even though the positions of the components may reflect the direction of data flow in the PE 800, the positions of the components in FIG. 8 do not necessarily represent physical positions of the components in the PE 800.

The PE 800 may perform sequential cycles of MAC operations. In a cycle of MAC operations, the PE 800 may process multiple input operand and multiple weight operands, e.g., given the presence of multiple multipliers 850 in the MAC unit 840. Each quantization subtractor 810 may subtract an activation zeropoint from quantized activations of an input operand and generates intermediate activations. The intermediate activations are provided to the input storage unit 820 and stored in the input storage unit 820. The input storage unit 820 may store intermediate activations of up to four input operands in the cycle of MAC operations. Each quantization subtractor 815 may subtract a weight zeropoint from quantized weights of a weight operand and generates intermediate weights. The intermediate weights are provided to the weight storage unit 830 and stored in the weight storage unit 830. The weight storage unit 830 may store intermediate weights of up to four weight operands in the cycle of MAC operations. The quantization subtractors 810 and 815 may be examples of the quantization subtractors 510 in FIG. 5. The input storage unit 820 may be an example of the input storage unit 520 in FIG. 5. The weight storage unit 830 may be an example of the weight storage unit 530 in FIG. 5.

The multipliers 850 fetches intermediate activations and intermediate weights from the input storage unit 820 and weight storage unit 830 and compute intermediate products. In an example round, the multiplier 850A receives the intermediate activation computed by the quantization subtractor 810A and the intermediate weight computed by the quantization subtractor 815A, the multiplier 850B receives the intermediate activation computed by the quantization subtractor 810B and the intermediate weight computed by the quantization subtractor 815B, the multiplier 850C receives the intermediate activation computed by the quantization subtractor 810C and the intermediate weight computed by the quantization subtractor 815C, and the multiplier 850D receives the intermediate activation computed by the quantization subtractor 810D and the intermediate weight computed by the quantization subtractor 815D.

In other cycles, the intermediate activations and intermediate weights may be used by different multipliers 850. For instance, in a subsequent round, the multiplier 850A may receive the intermediate activation computed by the quantization subtractor 810B and the intermediate weight computed by the quantization subtractor 815A, the multiplier 850B may receive the intermediate activation computed by the quantization subtractor 810C and the intermediate weight computed by the quantization subtractor 815B, the multiplier 850C may receive the intermediate activation computed by the quantization subtractor 810D and the intermediate weight computed by the quantization subtractor 815C. The intermediate activations and intermediate weights from the input storage unit 820 and weight storage unit 830 may be reused more than once.

Storing the intermediate activations and intermediate weights in the input storage unit 820 and weight storage unit 830 can therefore facilitate reuse of the intermediate activations and intermediate weights within multiple cycles of MAC operations by the MAC unit 840. The quantization subtractors 810 and 815 can compute the intermediate activations and intermediate weights in a single cycle and do not need to re-compute the intermediate activations and intermediate weights in other cycles where the intermediate activations and intermediate weights are used. Therefore, the power needed by the quantization subtractors 810 and 815 can be minimized.

The adders 860A, 860B, and 865 constitute an internal adder assembly of the MAC unit 840. The adder 860A receives products computed by the multiplier 850A and 850B and produces a first sum. The adder 860B receives products computed by the multiplier 850C and 850D and produces a second sum. The first sum and the second sum can be stored in the pipeline registers 870A and 870B, respectively, which can facilitate retiming of the pipeline stage before the sums are further accumulated by the adder 865. For instance, the process of generating the first sum may take a different amount of time from the process of generating the second time. The presence of the pipeline registers 870A and 870B can facilitate synchronization of the delivery of the first sum and the second sum to the adder 865. In an embodiment where the generation of the first sum takes longer than the generation of the second sum, the first sum may be stored in the pipeline register 880A till when or after the second sum is generated.

The adder 865 receives the first sum and the second sum from the pipeline registers 870A and 870B and accumulate the sums to generate an output of the MAC unit 840. The output of the MAC unit 840 is further provided to the accumulator 880. The accumulator 880 may accumulate the output of the MAC unit 840 with a value stored in the output storage unit 890. The value may be an output of another PE 800, which has been sent to the PE 800 and stored in the output storage unit 890. The output of the accumulator 880 can be stored in the output storage unit 890. The output of the accumulator 880 may be an integer value.

The output of the accumulator 880 may be provided directly or indirectly to the quantization multiplier 895. In some embodiments, the quantization multiplier 895 may be placed inside the PE 800 and multiply the output of the accumulator 880 with a quantization scale to generate a real number. The real number may be stored in the output storage unit 890 or another data storage unit. In other embodiments, the quantization multiplier 895 may be placed outside the PE 800. For instance, the quantization multiplier 895 may be coupled to a PE array where the PE 800 is located. The quantization multiplier 895 multiply an output of the PE array, which may be an integer, with a quantization scale to generate a real number. The real number may be stored in an output storage unit of a PE in the PE array or in a buffer of the PE column, e.g., the column buffer 420 in FIG. 4 or the buffer 330 in FIG. 3.

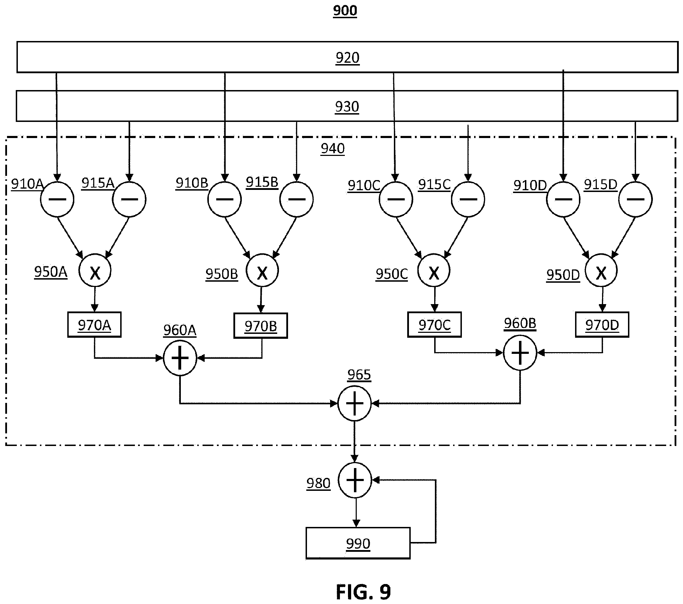

FIG. 9 illustrates yet another example PE capable of MAC operations on quantized data, in accordance with various embodiments. The PE 900 may be an embodiment of the PE 500 in FIG. 5. The PE 900 includes an input storage unit 920, a weight storage unit 930, an MAC unit 940, an accumulator 980, and an output storage unit 990. The MAC unit 940 includes quantization subtractors 910A-D (collectively referred to as "quantization subtractors 910" or "quantization subtractor 910"), quantization subtractors 915A-D (collectively referred to as "quantization subtractors 915" or "quantization subtractor 915"), multipliers 950A-D (collectively referred to as "multipliers 950" or "multiplier 950"), adders 960A and 960B, pipeline registers 970A-970D (collectively referred to as "pipeline registers 970" or "pipeline register 970"), and an adder 965.

In other embodiments, alternative configurations, different or additional components may be included in the PE 900. Further, functionality attributed to a component of the PE 900 may be accomplished by a different component included in the PE 900, a different component included in a PE array where the PE 900 is placed, or by a different system. The positions of the components of the PE 900 in FIG. 9 are for the purpose of illustration only. Even though the positions of the components may reflect the direction of data flow in the PE 900, the positions of the components in FIG. 9 do not necessarily represent physical positions of the components in the PE 900.

Different from the PE 600 where the quantization subtractors 610 and 615 are placed outside the MAC unit 640 and before the input storage unit 620 and the weight storage unit 630, the quantization subtractors 910 and 915 in the PE 900 are placed inside the MAC unit 940 and after the input storage unit 920 and the weight storage unit 930. In the embodiments of FIG. 9, the input storage unit 920 stores quantized activations, and the weight storage unit 930 stores quantized weights.

In a cycle of MAC operation by the PE 900, each quantization subtractor 910 receives a quantized activation, subtracts an activation zeropoint from the quantized activation, and generates an intermediate activation. Each quantization subtractor 915 receives a quantized weight, subtracts a weight zeropoint from the quantized weight, and generates an intermediate weight. Each pair of intermediate activation and intermediate weight is provided to a multiplier 950. For instance, the multiplier 950A receives the intermediate activation computed by the quantization subtractor 910A and intermediate weight computed by the quantization subtractor 915A, the multiplier 950B receives the intermediate activation computed by the quantization subtractor 910B and intermediate weight computed by the quantization subtractor 915B, the multiplier 950C receives the intermediate activation computed by the quantization subtractor 910C and intermediate weight computed by the quantization subtractor 915C, and the multiplier 950D receives the intermediate activation computed by the quantization subtractor 910D and intermediate weight computed by the quantization subtractor 915D.

The placement of the quantization subtractors 910 and 915 inside the MAC unit 940 cannot facilitate reuse of intermediate activations or intermediate weights generated by the quantization subtractors 910 or 915 in different cycles of MAC operations, as the intermediate activations or intermediate weights are not stored in the input storage unit 920 or the weight storage unit 930. Rather, the input storage unit 920 and the weight storage unit 930 store quantized activations and quantized weights. Quantization subtractions may be required in every cycle of MAC operation by the PE 900. Compared with the placement of the quantization subtractors 610 and 615 in the PE 600, the PE 900 facilitates less data reuse and consumes more power for performing the same amount of MAC operations.

Additionally, the placement of the quantization subtractors 910 and 915 inside the MAC unit 940 requires the pipeline registers 970 to store products generated by the multipliers 950. The pipeline registers 970 can be used to retime pipeline stages, as the processing times needed by different quantization subtractors 910 and 915 can be different. With the pipeline registers 970, the adders 960A and 960B can receive the products from the four multipliers 950 in the same cycle. As shown in FIG. 9, each multiplier 950 is associated with a separate pipeline register 970, which stores a product generated by the multiplier 950. Even though the PE 900 includes the same number of multipliers as the PE 600, the PE 900 requires four pipeline register 970 versus the PE 600 requires two pipeline register 670. The PE 900 can be more expensive and can consume a larger area than the PE 600.

The adders 960A, 960B, and 965 constitute an internal adder assembly of the MAC unit 940. The adder 960A receives, from the pipeline registers 970A and 970B, products computed by the multiplier 950A and 950B and produces a first sum. The adder 960B receives, from the pipeline registers 970D and 970D, products computed by the multiplier 950C and 950D and produces a second sum. The adder 965 receives the first sum and the second sum from the pipeline registers 970A and 970B and accumulate the sums to generate an output of the MAC unit 940. The output of the MAC unit 940 is further provided to the accumulator 980. The accumulator 980 may accumulate the output of the MAC unit 940 with a value stored in the output storage unit 990. The value may be an output of another PE 900, which has been sent to the PE 900 and stored in the output storage unit 990. The output of the accumulator 980 can be stored in the output storage unit 990.

Even though not shown in FIG. 9, the MAC operation by the PE 900 may include or be otherwise associated with a quantization multiplication. The quantization multiplication may be performed by a quantization multiplier that can be placed in the MAC unit 940, outside the MAC unit 940 but inside the PE 900, or outside the PE 900.

*Example Method of Deep Learning*

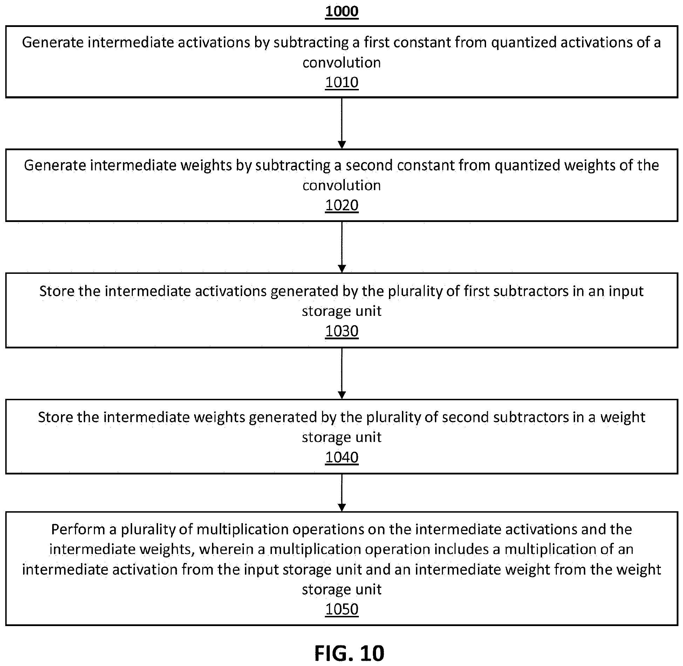

FIG. 10 is a flowchart showing a method 1000 of deep learning, in accordance with various embodiments. The method 1000 may be performed by the PE 500 in FIG. 5. Although the method 1000 is described with reference to the flowchart illustrated in FIG. 10, many other methods for deep learning may alternatively be used. For example, the order of execution of the steps in FIG. 10 may be changed. As another example, some of the steps may be changed, eliminated, or combined.

The PE 500 generates 1010 intermediate activations by subtracting a first constant from quantized activations of a convolution. The PE 500 generates 1020 intermediate weights by subtracting a second constant from quantized weights of the convolution. The PE 500 stores 1030 the intermediate activations generated by the plurality of first subtractors in an input storage unit. The PE 500 stores 1040 the intermediate weights generated by the plurality of second subtractors in a weight storage unit.

The PE 500 performs 1050 a plurality of multiplication operations on the intermediate activations and the intermediate weights, wherein a multiplication operation includes a multiplication of an intermediate activation from the input storage unit and an intermediate weight from the weight storage unit.

In some embodiments, the PE 500 generates an intermediate output by accumulating products generated by performing the plurality of multiplication operations. In some embodiments, the PE 500 generates an output by multiplying the intermediate output of the PE with a constant. The intermediate output is an integer. The output is a floating-point number.

An intermediate partial sum may be generated by accumulating the intermediate output with another intermediate output generated based on different quantized activations different quantized weights. A partial sum may be generated by multiplying the intermediate partial sum with a constant. The intermediate partial sum is an integer. The partial sum is a floating-point number.

A first sum may be generated by accumulating products generated by performing two or more multiplication operations of the plurality of multiplication operations. The first sum is stored in a first pipeline register. A second sum is generated by accumulating products generated by performing two or more other multiplication operations of the plurality of multiplication operations. The second sum is stored in a second pipeline register.

*Example DNN Accelerator*

FIG. 11 is a block diagram of an example DNN accelerator 1100, in accordance with various embodiments. The DNN accelerator 1100 can run DNNs, e.g., the DNN 100 in FIG. 1. The DNN accelerator 1100 includes a memory 1110, a DMA (direct memory access) engine 1120, and compute tiles 1130. In other embodiments, alternative configurations, different or additional components may be included in the DNN accelerator 1100. For instance, the DNN accelerator 1100 may include more than one memory 1110 or more than one DMA engine 1120. Further, functionality attributed to a component of the DNN accelerator 1100 may be accomplished by a different component included in the DNN accelerator 1100 or by a different system.

The memory 1110 stores data to be used by the compute tiles 1130 to perform deep learning operations in DNN models. Example deep learning operations include convolutions (also referred to as "convolutional operations"), pooling operations, elementwise operations, other types of deep learning operations, or some combination thereof. The memory 1110 may be a main memory of the DNN accelerator 1100. In some embodiments, the memory 1110 includes one or more DRAMs (dynamic random-access memory). For instance, the memory 1110 may store the input tensor, convolutional kernels, or output tensor of a convolution in a convolutional layer of a DNN, e.g., the convolutional layer 110. The output tensor can be transmitted from a local memory of a compute tile 1130 to the memory 1110 through the DMA engine 1120.

The DMA engine 1120 facilitates data transfer between the memory 1110 and local memories of the compute tiles 1130. For example, the DMA engine 1120 can read data from the memory 1110 and write data into a local memory of a compute tile 1130. As another example, the DMA engine 1120 can read data from a local memory of a compute tile 1130and write data into the memory 1110. The DMA engine 1120 provides a DMA feature that allows the compute tile 1130 to initiate data transfer between the memory 1110 and the local memories of the compute tiles 1130 and to perform other operations while the data transfer is in being conducted. In some embodiments, the DMA engine 1120 may read tensors from the memory 1110, modify the tensors in a way that is optimized for the compute tile 1130 before it writes the tensors into the local memories of the compute tiles 1130.

The compute tiles 1130 perform computation for deep learning operations. A compute tile 1130 may run the operations in a DNN layer, or a portion of the operations in the DNN layer. A compute tile 1130 may perform convolutions, e.g., standard convolution or depthwise convolution. In some embodiments, the compute tile 1130 receive an input tensor and one or more convolutional kernels and performs a convolution with the input tensor and convolutional kernels. The result of the convolution may be an output tensor, which can be further computed, e.g., by the compute tile 1130 or another compute tile. An example of the compute tile 1130 is the compute block 300 in FIG. 3. In some embodiments, the operations of the DNN layers may be run by multiple compute tiles 1130 in parallel. For instance, multiple compute tiles 1130 may each perform a portion of a workload for a convolution. Data may be shared between the compute tiles 1130.

*Example Deep Learning Environment*

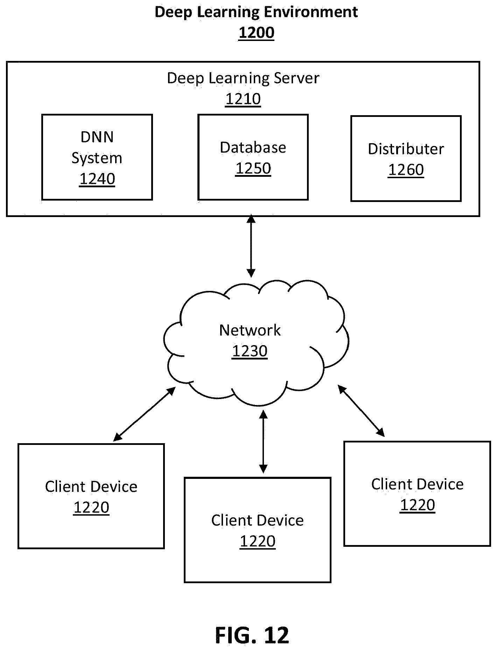

FIG. 12 illustrates a deep learning environment 1200, in accordance with various embodiments. The deep learning environment 1200 includes a deep learning server 1210 and a plurality of client devices 1220 (individually referred to as client device 1220). The deep learning server 1210 is connected to the client devices 1220 through a network 1230. In other embodiments, the deep learning environment 1200 may include fewer, more, or different components.

The deep learning server 1210 trains deep learning models using neural networks. A neural network is structured like the human brain and consists of artificial neurons, also known as nodes. These nodes are stacked next to each other in 3 types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The deep learning server 1210 can use various types of neural networks, such as DNN, recurrent neural network (RNN), generative adversarial network (GAN), long short-term memory network (LSTMN), and so on. During the process of training the deep learning models, the neural networks use unknown elements in the input distribution to extract features, group objects, and discover useful data patterns. The deep learning models can be used to solve various problems, e.g., making predictions, classifying images, and so on. The deep learning server 1210 may build deep learning models specific to particular types of problems that need to be solved. A deep learning model is trained to receive an input and outputs the solution to the particular problem.

In FIG. 12, the deep learning server 1210 includes a DNN system 1240, a database 1250, and a distributer 1260. The DNN system 1240 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. In some embodiments, the DNN system 1240 trains DNNs through knowledge distillation, e.g., dense-connection based knowledge distillation. The trained DNNs may be used on low memory systems, like mobile phones, IOT edge devices, and so on. An embodiment of the DNN system 1240 is the DNN accelerator 200 described above in conjunction with FIG. 2.

The database 1250 stores data received, used, generated, or otherwise associated with the deep learning server 1210. For example, the database 1250 stores a training dataset that the DNN system 1240 uses to train DNNs. In an embodiment, the training dataset is an image gallery that can be used to train a DNN for classifying images. The training dataset may include data received from the client devices 1220. As another example, the database 1250 stores hyperparameters of the neural networks built by the deep learning server 1210.

The distributer 1260 distributes deep learning models generated by the deep learning server 1210 to the client devices 1220. In some embodiments, the distributer 1260 receives a request for a DNN from a client device 1220 through the network 1230. The request may include a description of a problem that the client device 1220 needs to solve. The request may also include information of the client device 1220, such as information describing available computing resource on the client device. The information describing available computing resource on the client device 1220 can be information indicating network bandwidth, information indicating available memory size, information indicating processing power of the client device 1220, and so on. In an embodiment, the distributer may instruct the DNN system 1240 to generate a DNN in accordance with the request. The DNN system 1240 may generate a DNN based on the information in the request. For instance, the DNN system 1240 can determine the structure of the DNN and/or train the DNN in accordance with the request.

In another embodiment, the distributer 1260 may select the DNN from a group of pre-existing DNNs based on the request. The distributer 1260 may select a DNN for a particular client device 1220 based on the size of the DNN and available resources of the client device 1220. In embodiments where the distributer 1260 determines that the client device 1220 has limited memory or processing power, the distributer 1260 may select a compressed DNN for the client device 1220, as opposed to an uncompressed DNN that has a larger size. The distributer 1260 then transmits the DNN generated or selected for the client device 1220 to the client device 1220.

In some embodiments, the distributer 1260 may receive feedback from the client device 1220. For example, the distributer 1260 receives new training data from the client device 1220 and may send the new training data to the DNN system 1240 for further training the DNN. As another example, the feedback includes an update of the available computing resource on the client device 1220. The distributer 1260 may send a different DNN to the client device 1220 based on the update. For instance, after receiving the feedback indicating that the computing resources of the client device 1220 have been reduced, the distributer 1260 sends a DNN of a smaller size to the client device 1220.

The client devices 1220 receive DNNs from the distributer 1260 and applies the DNNs to perform machine learning tasks, e.g., to solve problems or answer questions. In various embodiments, the client devices 1220 input images into the DNNs and use the output of the DNNs for various applications, e.g., visual reconstruction, augmented reality, robot localization and navigation, medical diagnosis, weather prediction, and so on. A client device 1220 may be one or more computing devices capable of receiving user input as well as transmitting and/or receiving data via the network 1230. In one embodiment, a client device 1220 is a conventional computer system, such as a desktop or a laptop computer. Alternatively, a client device 1220 may be a device having computer functionality, such as a personal digital assistant (PDA), a mobile telephone, a smartphone, an autonomous vehicle, or another suitable device. A client device 1220 is configured to communicate via the network 1230. In one embodiment, a client device 1220 executes an application allowing a user of the client device 1220 to interact with the deep learning server 1210 (e.g., the distributer 1260 of the deep learning server 1210). The client device 1220 may request DNNs or send feedback to the distributer 1260 through the application. For example, a client device 1220 executes a browser application to enable interaction between the client device 1220 and the deep learning server 1210 via the network 1230. In another embodiment, a client device 1220 interacts with the deep learning server 1210 through an application programming interface (API) running on a native operating system of the client device 1220, such as IOS® or ANDROID™.

In an embodiment, a client device 1220 is an integrated computing device that operates as a standalone network-enabled device. For example, the client device 1220 includes display, speakers, microphone, camera, and input device. In another embodiment, a client device 1220 is a computing device for coupling to an external media device such as a television or other external display and/or audio output system. In this embodiment, the client device 1220 may couple to the external media device via a wireless interface or wired interface (e.g., an HDMI (High-Definition Multimedia Interface) cable) and may utilize various functions of the external media device such as its display, speakers, microphone, camera, and input devices. Here, the client device 1220 may be configured to be compatible with a generic external media device that does not have specialized software, firmware, or hardware specifically for interacting with the client device 1220.

The network 1230 supports communications between the deep learning server 1210 and client devices 1220. The network 1230 may comprise any combination of local area and/or wide area networks, using both wired and/or wireless communication systems. In one embodiment, the network 1230 may use standard communications technologies and/or protocols. For example, the network 1230 may include communication links using technologies such as Ethernet, 12010.11, worldwide interoperability for microwave access (WiMAX), 3G, 4G, code division multiple access (CDMA), digital subscriber line (DSL), etc. Examples of networking protocols used for communicating via the network 1230 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 1230 may be represented using any suitable format, such as hypertext markup language (HTML) or extensible markup language (XML). In some embodiments, all or some of the communication links of the network 1230 may be encrypted using any suitable technique or techniques.

*Example DNN System*

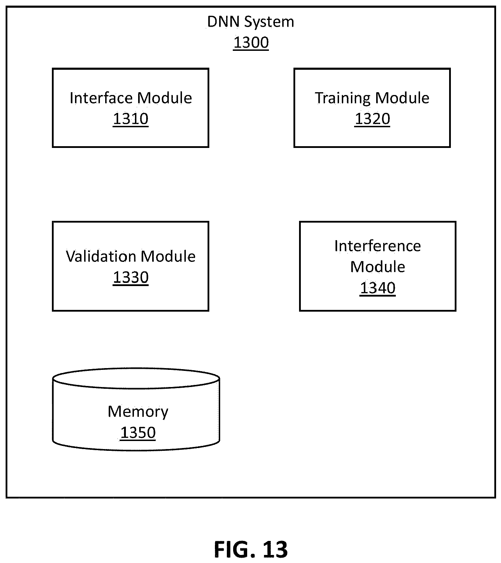

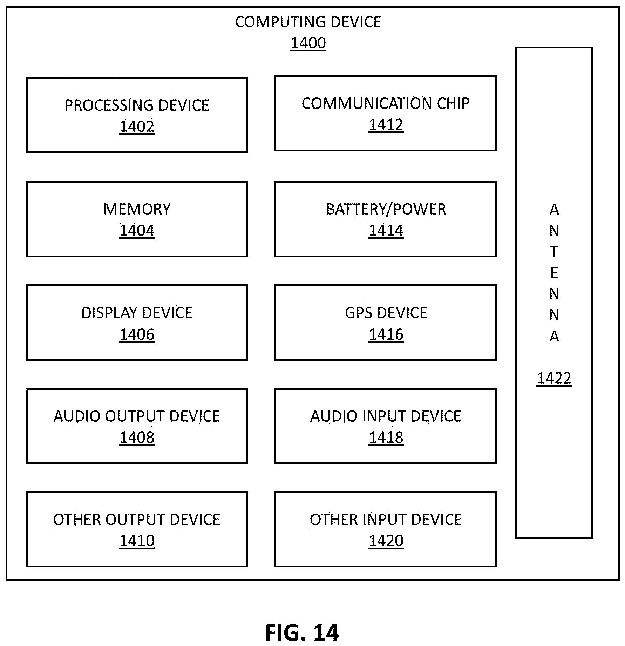

FIG. 13 is a block diagram of an example DNN system 1300, in accordance with various embodiments. The whole DNN system 1300 or a part of the DNN system 1300 may be implemented in the computing device 1400 in FIG. 14. The DNN system 1300 trains DNNs for various tasks, such as image classification, learning relationships between biological cells (e.g., DNA, proteins, etc.), control behaviors for devices (e.g., robots, machines, etc.), and so on. The DNN system 1300 includes an interface module 1310, a training module 1320, a validation module 1330, an inference module 1340, and a memory 1350. In other embodiments, alternative configurations, different or additional components may be included in the DNN system 1300. Further, functionality attributed to a component of the DNN system 1300 may be accomplished by a different component included in the DNN system 1300 or a different system. The DNN system 1300 or a component of the DNN system 1300 (e.g., the training module 1320 or inference module 1340) may include the computing device 1400.

The interface module 1310 facilitates communications of the DNN system 1300 with other systems. For example, the interface module 1310 establishes communications between the DNN system 1300 with an external database to receive data that can be used to train DNNs or input into DNNs to perform tasks. As another example, the interface module 1310 supports the DNN system 1300 to distribute DNNs to other systems, e.g., computing devices configured to apply DNNs to perform tasks.

The training module 1320 trains DNNs by using a training dataset. The training module 1320 forms the training dataset. In an embodiment where the training module 1320 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the validation module 1330 to validate performance of a trained DNN. The portion of the training dataset not including the tuning subset and the validation subset may be used to train the DNN.

The training module 1320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 13, 130, 500, 1300, or even larger.

The training module 1320 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different category by training.

In the process of defining the architecture of the DNN, the training module 1320 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1320 defines the architecture of the DNN, the training module 1320 inputs a training dataset into the DNN. The training dataset includes a plurality of training samples. An example of a training sample includes an object in an image and a ground-truth label of the object. The training module 1320 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1320 uses a cost function to minimize the error.

The training module 1320 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1320 finishes the predetermined number of epochs, the training module 1320 may stop updating the parameters in the DNN. The DNN having the updated parameters is referred to as a trained DNN.

The validation module 1330 verifies accuracy of trained DNNs. In some embodiments, the validation module 1330 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1330 may determine an accuracy score measuring the precision, recall, or a combination of precision and recall of the DNN. The validation module 1330 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1330 may compare the accuracy score with a threshold score. In an example where the validation module 1330 determines that the accuracy score of the augmented model is lower than the threshold score, the validation module 1330 instructs the training module 1320 to re-train the DNN. In one embodiment, the training module 1320 may iteratively re-train the DNN until the occurrence of a stopping condition, such as the accuracy measurement indication that the DNN may be sufficiently accurate, or a number of training rounds having taken place.

The inference module 1340 applies the trained or validated DNN to perform tasks. For instance, the inference module 1340 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the inference module 1340 distributes the DNN to other systems, e.g., computing devices in communication with the DNN system 1300, for the other systems to apply the DNN to perform the tasks.

The memory 1350 stores data received, generated, used, or otherwise associated with the DNN system 1300. For example, the memory 1350 stores the datasets used by the training module 1320 and validation module 1330. The memory 1350 may also store data generated by the training module 1320 and validation module 1330, such as the hyperparameters for training DNNs, internal parameters of trained DNNs (e.g., values of tunable parameters of activation functions, such as Fractional Adaptive Linear Units (FALUs)), etc. In the embodiment of FIG. 13, the memory 1350 is a component of the DNN system 1300. In other embodiments, the memory 1350 may be external to the DNN system 1300 and communicate with the DNN system 1300 through a network.

*Example Computing Device*

FIG. 14 is a block diagram of an example computing device 1400, in accordance with various embodiments. In some embodiments, the computing device 1400 can be used as the DNN system 1300 in FIG. 13. A number of components are illustrated in FIG. 14 as included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, but the computing device 1400 may include interface circuitry for coupling to the one or more components. For example, the computing device 1400 may not include a display device 1406, but may include display device interface circuitry (e.g., a connector and driver circuitry) to which a display device 1406 may be coupled. In another set of examples, the computing device 1400 may not include an audio input device 1418 or an audio output device 1408, but may include audio input or output device interface circuitry (e.g., connectors and supporting circuitry) to which an audio input device 1418 or audio output device 1408 may be coupled.

The computing device 1400 may include a processing device 1402 (e.g., one or more processing devices). The processing device 1402 processes electronic data from registers and/or memory to transform that electronic data into other electronic data that may be stored in registers and/or memory. The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1404 may include memory that shares a die with the processing device 1402. In some embodiments, the memory 1404 includes one or more non-transitory computer-readable media storing instructions executable to perform operations for deep learning, e.g., the method 1000 described above in conjunction with FIG. 10 or some operations performed by the PE 500 described above in conjunction with FIG. 5. The instructions stored in the one or more non-transitory computer-readable media may be executed by the processing device 1402.

In some embodiments, the computing device 1400 may include a communication chip 1412 (e.g., one or more communication chips). For example, the communication chip 1412 may be configured for managing wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1412 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1412 may operate in accordance with other wireless protocols in other embodiments. The computing device 1400 may include an antenna 1422 to facilitate wireless communications and/or to receive other wireless communications (such as AM or FM radio transmissions).

In some embodiments, the communication chip 1412 may manage wired communications, such as electrical, optical, or any other suitable communication protocols (e.g., the Ethernet). As noted above, the communication chip 1412 may include multiple communication chips. For instance, a first communication chip 1412 may be dedicated to shorter-range wireless communications such as Wi-Fi or Bluetooth, and a second communication chip 1412 may be dedicated to longer-range wireless communications such as global positioning system (GPS), EDGE, GPRS, CDMA, WiMAX, LTE, EV-DO, or others. In some embodiments, a first communication chip 1412 may be dedicated to wireless communications, and a second communication chip 1412 may be dedicated to wired communications.

The computing device 1400 may include battery/power circuitry 1414. The battery/power circuitry 1414 may include one or more energy storage devices (e.g., batteries or capacitors) and/or circuitry for coupling components of the computing device 1400 to an energy source separate from the computing device 1400 (e.g., AC line power).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include another output device 1410 (or corresponding interface circuitry, as discussed above). Examples of the other output device 1410 may include an audio codec, a video codec, a printer, a wired or wireless transmitter for providing information to other devices, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile internet device, a music player, a tablet computer, a laptop computer, a netbook computer, an ultrabook computer, a PDA, an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1400 may be any other electronic device that processes data.

*Select Examples*

The following paragraphs provide various examples of the embodiments disclosed herein.

Example 1 provides a PE for deep learning, the PE including a plurality of first subtractors configured to generate intermediate activations by subtracting a first constant from quantized activations of a convolution; a plurality of second subtractors configured to generate intermediate weights by subtracting a second constant from quantized weights of the convolution; an input storage unit configured to store the intermediate activations generated by the plurality of first subtractors; a weight storage unit configured to store the intermediate weights generated by the plurality of second subtractors; and a plurality of multipliers configured to perform multiplication operations on the intermediate activations and the intermediate weights, where a multiplication operation by a multiplier includes a multiplication of an intermediate activation from the input storage unit and an intermediate weight from the weight storage unit.

Example 2 provides the PE of example 1, further including an adder assembly configured to generate an intermediate output of the PE by accumulating products generated by the plurality of multipliers.

Example 3 provides the PE of example 2, further including an additional multiplier configured to generate an output of the PE by multiplying the intermediate output of the PE with a constant, where the intermediate output is an integer, and the output is a floating-point number.

Example 4 provides the PE of example 2 or 3, further including an accumulator configured to generate an intermediate partial sum by accumulating the intermediate output of the PE with an intermediate output of another PE.

Example 5 provides the PE of example 4, further including an output storage unit configured to store the intermediate partial sum.

Example 6 provides the PE of example 4, further including an additional multiplier configured to generate a partial sum by multiplying the intermediate partial sum with a constant, where the intermediate partial sum is an integer, and the partial sum is a floating-point number.

Example 7 provides the PE of any one of examples 2-6, where the adder assembly includes a first adder and a second adder, the first adder is configured to generate a first sum by accumulating products generated by two multipliers of the plurality of multipliers, the second adder is configured to generate a second sum by accumulating products generated by two other multipliers of the plurality of multipliers, and the PE further includes a first pipeline register configured to store the first sum and a second pipeline register configured to store the second sum.

Example 8 provides the PE of any of the preceding examples, where each multiplier is associated with a first subtractor and a second subtractor and is configured to multiple an intermediate activation generated by the first subtractor with an intermediate weight generated by the second subtractor.

Example 9 provides the PE of any of the preceding examples, where the input storage unit includes a plurality of register files, each of which is configured to store one or more intermediate activations to be used by a different multiplier of the plurality of multipliers.

Example 10 provides the PE of any of the preceding examples, where the weight storage unit includes a plurality of register files, each of which is configured to store one or more intermediate activations to be used by a different multiplier of the plurality of multipliers.

Example 11 provides a compute block for deep learning, the compute block including a buffer configured to store a portion of a quantized input tensor and a portion of a quantized filter, the quantized input tensor including a plurality of quantized activations of a convolution, the quantized filter including a plurality of quantized weights of the convolution; and a PE array configured to perform multiply-accumulate operations on the portion of the quantized input tensor and the portion of the quantized filter from the buffer, the PE array including a plurality of PEs, a PE including a plurality of first subtractors configured to generate intermediate activations by subtracting a first constant from quantized activations in the portion of the quantized input tensor, a plurality of second subtractors configured to generate intermediate weights by subtracting a second constant from quantized weights in the portion of the quantized filter, an input storage unit configured to store the intermediate activations generated by the plurality of first subtractors, a weight storage unit configured to store the intermediate weights generated by the plurality of second subtractors, and a plurality of multipliers configured to perform multiplication operations on the intermediate activations and the intermediate weights, where a multiplication operation by a multiplier includes a multiplication of an intermediate activation from the input storage unit and an intermediate weight from the weight storage unit.

Example 12 provides the compute block of example 11, further including a memory configured to store the quantized input tensor and the quantized filter, where the portion of the quantized input tensor and the portions of the quantized filter are written into the buffer from the memory.

Example 13 provides the compute block of example 11 or 12, where the PE further includes an adder assembly configured to generate an intermediate output of the PE by accumulating products generated by the plurality of multipliers.

Example 14 provides the compute block of example 13, where the PE further includes an adder assembly configured to generate an intermediate output of the PE by accumulating products generated by the plurality of multipliers; an additional multiplier configured to generate an output of the PE by multiplying the intermediate output of the PE with a constant, where the intermediate output is an integer, and the output is a floating-point number.

Example 15 provides the compute block of example 13 or 14, where the PE array further includes an additional PE configured to generate an additional intermediate output; and an accumulator configured to generate an intermediate partial sum by accumulating the intermediate output and the additional intermediate output.

Example 16 provides the compute block of example 15, further including an additional multiplier configured to generate a partial sum by multiplying the intermediate partial sum with a constant, where the intermediate partial sum is an integer, and the partial sum is a floating-point number.

Example 17 provides the compute block of any one of examples 13-16, where the adder assembly includes a first adder and a second adder, the first adder is configured to generate a first sum by accumulating products generated by two multipliers of the plurality of multipliers, the second adder is configured to generate a second sum by accumulating products generated by two other multipliers of the plurality of multipliers, and the PE further includes a first pipeline register configured to store the first sum and a second pipeline register configured to store the second sum.

Example 18 provides the compute block of any one of examples 11-17, where each multiplier is associated with a first subtractor and a second subtractor and is configured to multiple an intermediate activation generated by the first subtractor with an intermediate weight generated by the second subtractor.

Example 19 provides the compute block of any one of examples 11-18, where the input storage unit includes a plurality of register files, each of which is configured to store one or more intermediate activations to be used by a different multiplier of the plurality of multipliers.

Example 20 provides the compute block of any one of examples 11-19, where the weight storage unit includes a plurality of register files, each of which is configured to store one or more intermediate activations to be used by a different multiplier of the plurality of multipliers.

Example 21 provides a method for deep learning, including generating intermediate activations by subtracting a first constant from quantized activations of a convolution; generating intermediate weights by subtracting a second constant from quantized weights of the convolution; storing the intermediate activations in an input storage unit; storing the intermediate weights in a weight storage unit; and performing a plurality of multiplication operations on the intermediate activations and the intermediate weights, where a multiplication operation includes a multiplication of an intermediate activation from the input storage unit and an intermediate weight from the weight storage unit.

Example 22 provides the method of example 21, further including generating an intermediate output by accumulating products generated by performing the plurality of multiplication operations.

Example 23 provides the method of example 22, further including generating an output by multiplying the intermediate output with a constant, where the intermediate output is an integer, and the output is a floating-point number.

Example 24 provides the method of example 22 or 23, further including generating an intermediate partial sum by accumulating the intermediate output with another intermediate output generated based on different quantized activations different quantized weights; and generating a partial sum by multiplying the intermediate partial sum with a constant, where the intermediate partial sum is an integer, and the partial sum is a floating-point number.

Example 25 provides the method of any one of examples 21-24, further including generating a first sum by accumulating products generated by performing two or more multiplication operations of the plurality of multiplication operations; storing the first sum in a first pipeline register; generating a second sum by accumulating products generated by performing two or more other multiplication operations of the plurality of multiplication operations; and storing the second sum in a second pipeline register.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A processing element for deep learning, the processing element comprising:

   a plurality of first subtractors configured to generate intermediate activations by subtracting a first constant from quantized activations of a convolution;
   a plurality of second subtractors configured to generate intermediate weights by subtracting a second constant from quantized weights of the convolution;
   an input storage unit configured to store the intermediate activations generated by the plurality of first subtractors;
   a weight storage unit configured to store the intermediate weights generated by the plurality of second subtractors; and
   a plurality of multipliers configured to perform multiplication operations on the intermediate activations and the intermediate weights, wherein a multiplication operation by a multiplier includes a multiplication of an intermediate activation from the input storage unit and an intermediate weight from the weight storage unit.

2. The processing element of claim 1, further comprising:
an adder assembly configured to generate an intermediate output of the processing element by accumulating products generated by the plurality of multipliers.

3. The processing element of claim 2, further comprising:
an additional multiplier configured to generate an output of the processing element by multiplying the intermediate output of the processing element with a constant, wherein the intermediate output is an integer, and the output is a floating-point number.

4. The processing element of claim 2 or 3, further comprising:
an accumulator configured to generate an intermediate partial sum by accumulating the intermediate output of the processing element with an intermediate output of another processing element.

5. The processing element of claim 4, further comprising:

an output storage unit configured to store the intermediate partial sum; or
an additional multiplier configured to generate a partial sum by multiplying the intermediate partial sum with a constant, wherein the intermediate partial sum is an integer, and the partial sum is a floating-point number.

6. The processing element of any one of claims 2-5, wherein:

the adder assembly comprises a first adder and a second adder,
the first adder is configured to generate a first sum by accumulating products generated by two multipliers of the plurality of multipliers,
the second adder is configured to generate a second sum by accumulating products generated by two other multipliers of the plurality of multipliers, and
the processing element further comprises a first pipeline register configured to store the first sum and a second pipeline register configured to store the second sum.

7. The processing element of any of the preceding claims, wherein each multiplier is associated with a first subtractor and a second subtractor and is configured to multiple an intermediate activation generated by the first subtractor with an intermediate weight generated by the second subtractor.

8. The processing element of any of the preceding claims, wherein the input storage unit comprises a plurality of register files, each of which is configured to store one or more intermediate activations to be used by a different multiplier of the plurality of multipliers.

9. The processing element of any of the preceding claims, wherein the weight storage unit comprises a plurality of register files, each of which is configured to store one or more intermediate activations to be used by a different multiplier of the plurality of multipliers.

10. A compute block for deep learning, the compute block comprising:

a buffer configured to store a portion of a quantized input tensor and a portion of a quantized filter, the quantized input tensor comprising a plurality of quantized activations of a convolution, the quantized filter comprising a plurality of quantized weights of the convolution; and
a processing element array configured to perform multiply-accumulate operations on the portion of the quantized input tensor and the portion of the quantized filter from the buffer, the processing element array comprising a plurality of processing elements

11. The compute block of claim 10, further comprising:

a memory configured to store the quantized input tensor and the quantized filter,
wherein the portion of the quantized input tensor and the portions of the quantized filter are written into the buffer from the memory.

12. A method for deep learning, comprising:

generating intermediate activations by subtracting a first constant from quantized activations of a convolution;
generating intermediate weights by subtracting a second constant from quantized weights of the convolution;
storing the intermediate activations in an input storage unit;
storing the intermediate weights in a weight storage unit; and
performing a plurality of multiplication operations on the intermediate activations and the intermediate weights, wherein a multiplication operation includes a multiplication of an intermediate activation from the input storage unit and an intermediate weight from the weight storage unit.

**13.** The method of claim 12, further comprising: generating an intermediate output by accumulating products generated by performing the plurality of multiplication operations.

**14.** The method of claim 13, further comprising:

generating an output by multiplying the intermediate output with a constant, wherein the intermediate output is an integer, and the output is a floating-point number; or
generating an intermediate partial sum by accumulating the intermediate output with another intermediate output generated based on different quantized activations different quantized weights, and generating a partial sum by multiplying the intermediate partial sum with a constant, wherein the intermediate partial sum is an integer, and the partial sum is a floating-point number.

**15.** The method of any one of claims 12-14, further comprising:

generating a first sum by accumulating products generated by performing two or more multiplication operations of the plurality of multiplication operations;
storing the first sum in a first pipeline register;
generating a second sum by accumulating products generated by performing two or more other multiplication operations of the plurality of multiplication operations; and
storing the second sum in a second pipeline register.

DNN
**100**

Object
115

Object
125

Object
135

Input Image
105

Convolutional Layer 110

Pooling Layer 120

Fully Connected Layer
130

140 150 160
163
183
180 190
193

**FIG. 1**

**FIG. 2**

Compute Block
300

Memory 310

Read Module
320

Write Module
325

Buffer 330

Load Module
340

Drain Module
350

PE Array 360

FIG. 3

**400**

**405**                      **405**                      **405**

**FIG. 4**

PE
500

Quantization
Subtractor
510

Input Storage
Unit
520

Weight Storage
Unit
530

Quantization
Multiplier
560

MAC Unit
540

Multiplier
580

Internal Adder
Assembly
590

Accumulator
550

Output Storage Unit
570

**FIG. 5**

**600**

**FIG. 6**

**700**

710A  715A     710B   715B        710C   715C        710D   715D

720

730

740

750A  750B        750C        750D

760A        760B

770A        770B

765

785

780

790

**FIG. 7**

**FIG. 8**

**FIG. 9**

**1000**

Generate intermediate activations by subtracting a first constant from quantized activations of a convolution
1010

Generate intermediate weights by subtracting a second constant from quantized weights of the convolution
1020

Store the intermediate activations generated by the plurality of first subtractors in an input storage unit
1030

Store the intermediate weights generated by the plurality of second subtractors in a weight storage unit
1040

Perform a plurality of multiplication operations on the intermediate activations and the intermediate weights, wherein a multiplication operation includes a multiplication of an intermediate activation from the input storage unit and an intermediate weight from the weight storage unit
1050

# FIG. 10

DNN Accelerator
1100

Memory
1110

DMA Engine
1120

Compute Tile
1130

## FIG. 11

**Deep Learning Environment**
**1200**

Deep Learning Server
1210

| DNN System 1240 | Database 1250 | Distributer 1260 |

Network
1230

Client Device
1220

Client Device
1220

Client Device
1220

# FIG. 12

DNN System
1300

Interface Module
1310

Training Module
1320

Validation Module
1330

Interference
Module
1340

Memory
1350

**FIG. 13**

COMPUTING DEVICE
1400

| | |
|---|---|
| PROCESSING DEVICE 1402 | COMMUNICATION CHIP 1412 |
| MEMORY 1404 | BATTERY/POWER 1414 |
| DISPLAY DEVICE 1406 | GPS DEVICE 1416 |
| AUDIO OUTPUT DEVICE 1408 | AUDIO INPUT DEVICE 1418 |
| OTHER OUTPUT DEVICE 1410 | OTHER INPUT DEVICE 1420 |

ANTENNA

1422

**FIG. 14**

Europäisches
Patentamt

European
Patent Office

Office européen
des brevets

# EUROPEAN SEARCH REPORT

**Application Number**

EP 23 19 1148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/294413 A1 (VANTREASE DANA MICHELLE [US] ET AL) 26 September 2019 (2019-09-26) | 10,11 | INV. G06N3/0464 |
| Y | * paragraphs [0097] – [0121]; claim 4; figure 9 * | 1-9, 12-15 | G06N3/048 G06N3/0495 G06N3/063 |
| Y | MUJTABA AHMED ET AL: "Low Latency Implementations of CNN for Resource-Constrained IoT Devices", IEEE TRANSACTIONS ON CIRCUITS AND SYSTEMS II: EXPRESS BRIEFS, IEEE, USA, vol. 69, no. 12, 7 September 2022 (2022-09-07), pages 5124-5128, XP011928855, ISSN: 1549-7747, DOI: 10.1109/TCSII.2022.3205029 [retrieved on 2022-09-08] * Section III * | 1-9, 12-15 | |
| A | US 2021/208885 A1 (SONG CHOUNG KI [KR]) 8 July 2021 (2021-07-08) * paragraphs [0156] – [0188] * | 1-15 | |
| A | BENOIT JACOB ET AL: "Quantization and Training of Neural Networks for Efficient Integer-Arithmetic-Only Inference", EYE IN-PAINTING WITH EXEMPLAR GENERATIVE ADVERSARIAL NETWORKS, 15 December 2017 (2017-12-15), pages 2704-2713, XP055599888, DOI: 10.1109/CVPR.2018.00286 ISBN: 978-1-5386-6420-9 * Sections 1-4 * | 1-15 | **TECHNICAL FIELDS SEARCHED (IPC)** G06N |
| A | US 2022/188075 A1 (RAHA ARNAB [US] ET AL) 16 June 2022 (2022-06-16) * paragraphs [0046] – [0106] * | 1-15 | |

The present search report has been drawn up for all claims

| Place of search | Date of completion of the search | Examiner |
|---|---|---|
| The Hague | 2 February 2024 | Targon, Valerio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 1148

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2024

| Patent document cited in search report | | Publication date | Patent family member(s) | | Publication date |
|---|---|---|---|---|---|
| US 2019294413 | A1 | 26-09-2019 | CN | 111937010 A | 13-11-2020 |
| | | | EP | 3738082 A1 | 18-11-2020 |
| | | | JP | 6946572 B2 | 06-10-2021 |
| | | | JP | 2021510888 A | 30-04-2021 |
| | | | US | 2019294413 A1 | 26-09-2019 |
| | | | US | 2020293284 A1 | 17-09-2020 |
| | | | WO | 2019183202 A1 | 26-09-2019 |
| US 2021208885 | A1 | 08-07-2021 | NONE | | |
| US 2022188075 | A1 | 16-06-2022 | NONE | | |

EPO FORM P0459

For more details about this annex : see Official Journal of the European Patent Office, No. 12/82